# EUROPEAN PATENT SPECIFICATION

(11) **EP 4 091 110 B1**
(45) Date of publication and mention of the grant of the patent: **15.11.2023**
(21) Application number: 20838779.5
(22) Date of filing: 11.12.2020
(51) Int. Cl.: G06N 20/20, G06F 11/30

(54) **SYSTEMS AND METHODS FOR DISTRIBUTED INCIDENT CLASSIFICATION AND ROUTING**
SYSTEME UND VERFAHREN ZUR VERTEILTEN EREIGNISKLASSIFIZIERUNG UND -LENKUNG
SYSTÈMES ET PROCÉDÉS DE CLASSIFICATION ET D'ACHEMINEMENT D'INCIDENTS DISTRIBUÉS

(30) Priority: 17.01.2020 US 202016746350
(43) Date of publication of application: 23.11.2022
(73) Proprietor: Microsoft Technology Licensing, LLC, Redmond, WA 98052-6399 (US)
(72) Inventor: ARZANI, Behnaz, Redmond, Washington 98052-6399 (US); GAO, Jiaqi, Redmond, Washington 98052-6399 (US); BIANCHINI, Ricardo G., Redmond, Washington 98052-6399 (US); VIEIRA FRUJERI, Felipe, Redmond, Washington 98052-6399 (US); WANG, Xiaohang, Redmond, Washington 98052-6399 (US); LEE, Henry, Redmond, Washington 98052-6399 (US); MALTZ, David A., Redmond, Washington 98052-6399 (US)
(74) Representative: CMS Cameron McKenna Nabarro Olswang LLP
(86) International application number: PCT/US2020/064401
(87) International publication number: WO 2021/145984

(56) References cited:
- EP-A1- 3 399 429
- US-A1- 2019 087 746

## Description

### BACKGROUND

For cloud providers in a cloud environment, it is important to resolve any problems or incidents that arise as quickly and efficiently as possible. To do this, incidents should be assigned to the resource(s) most capable of quickly resolving the incident. Resolving problems quickly is important for maintaining service-level objectives, while resolving incidents efficiently is important for both quick resolution and to avoid wasting resources that are not the most optimal for resolving a particular incident. However, existing techniques-such as, for example, relying on humans to predict the causes of incidents and route incidents to resolution resources accordingly-are neither quick nor efficient. Using these existing techniques, incidents are commonly misrouted-that is, sent to teams that are unable to resolve an incident or unable to resolve the incident as efficiently as another team. Misrouting of incidents prolongs the service-level effects and wastes resources, such as the time spent by team members attempting to resolve an incident outside of their expertise.

It is with respect to these and other general considerations that embodiments have been described. Also, although relatively specific problems have been discussed, it should be understood that the embodiments should not be limited to solving the specific problems identified in the background.
US 2019/0087746 A1 discloses methods for automatic and intelligent incident routing. The methods intelligently optimize routing of incidents to correct owners from a pool of many possible owners by utilizing learning models and algorithms based on feature vectors. EP3399429 A1 discloses model building architecture and smart routing of work items.

### SUMMARY

It is therefore the object of the present invention to provide an improved computer-implemented method for generating an incident-classification prediction in a cloud-computing system, and a corresponding system.

This object is solved by the subject matter of the independent claims.

Preferred embodiments are defined by the dependent claims.

Aspects of the present disclosure relate to utilization of team-specific scouts (e.g., predictors) to make decisions that may be used to make automated incident-routing decisions. In an example, a team is responsible for a certain part of a cloud environment, and its members possess expertise relating to that part of the cloud environment. This team may utilize this expertise to create or to assist in creating an incident-routing scout. In some examples, the scout receives incident descriptions and, based on the scout's specifications, accesses monitoring data that may be related to an incident. Then, using a machine learning model, the scout may evaluate the accessed data to generate a prediction about whether or not the team with which the scout is associated will be able to resolve the described incident.

Aspects of the present disclosure also relate to receiving predictions from more than one team-specific scout and deciding, based on these predictions, where to route an incident. In an example, there is more than one team-specific scout. In this example, each team-specific scout receives incident descriptions and generates a prediction about whether or not the team with which the scout is associated will be able to resolve the described incident. A prediction aggregator, or scout master, receives these predictions and decides to which team to route the incident.

Aspects of the present disclosure relate to a framework for designing a team-specific scout. In examples, a framework is provided to a team responsible for a certain part of the cloud environment. In examples, the framework may include prompts or instructions indicating to the team what information is useful to construct a team-specific scout. Useful information may include, among other things: the type of monitoring data normally utilized by the team, the location of monitoring data utilized by the team, instructions for processing the monitoring data normally utilized by the team, information describing the topology or dependencies between cloud components, or any other information related to how a scout might generate a prediction based on an incident description.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

### BRIEF DESCRIPTION OF THE DRAWINGS

Non-limiting and non-exhaustive examples are described with reference to the following Figures.
Figure 1A illustrates an overview of an example system for domain-specific incident routing in a cloud environment.
Figure 1B illustrates an overview of an example system for domain-specific incident routing in a cloud environment.
Figure 2 illustrates an overview of an example method for generating an incident-classification prediction in a cloud environment.
Figure 3 illustrates an overview of an example method for processing monitoring data identified as being relevant to an incident.
Figure 4 illustrates an example method for screening incident descriptions.
Figure 5 illustrates an example method for creating a team-specific scout.
Figure 6 illustrates an example method for routing incidents based on incident-classification predictions from team-specific scouts.
Figure 7 illustrates an example method for creating a team-specific scout.
Figure 8A illustrates an example flow diagram of interactions between incident-routing components.
Figure 8B illustrates an example flow diagram of interactions between incident-routing components.
Figure 9 is a block diagram illustrating example physical components of a computing device with which aspects of the disclosure may be practiced.
Figures 10A and 10B are simplified block diagrams of a mobile computing device with which aspects of the present disclosure may be practiced.

### DETAILED DESCRIPTION

In the following detailed description, references are made to the accompanying drawings that form a part hereof, and in which are shown by way of illustrations specific embodiments or examples. These aspects may be combined, other aspects may be utilized, and structural changes may be made without departing from the present disclosure. Embodiments may be practiced as methods, systems or devices. Accordingly, embodiments may take the form of a hardware implementation, an entirely software implementation, or an implementation combining software and hardware aspects. The following detailed description is therefore not to be taken in a limiting sense, and the scope of the present disclosure is defined by the appended claims and their equivalents.

In a cloud environment, a cloud provider offers storage, network, and computing services to cloud customers over a network such as the Internet. The cloud provider maintains hardware, software, infrastructure, and other aspects necessary to allow its cloud customers to design and deploy a wide variety of programs, applications, and services so that their customers do not need to purchase and maintain on-premises computing resources. The cloud provider may offer its customers a variety of services such as storage, computing, or a combination thereof. To provide these services to customers at a large scale, though, a cloud provider has to maintain a great number and variety of cloud components, often in a variety of different physical locations. In addition, the cloud provider and the cloud customer may utilize components or services provided by third parties, such as internet service providers, in accessing the cloud resources. In a cloud environment, cloud components operate in combination with each other to allow the cloud provider to provide computing services to cloud customers. If a cloud component malfunctions, the cloud provider may not be able to provide computing services to its customers at the level of quality expected by customers. Or, in other instances of component malfunction, a cloud provider may not be able to provide its customers with computing services at all. As used herein, incident refers to any such instance of one or more cloud components functioning differently than intended or expected.

In examples, the cloud provider utilizes teams of engineers to minimize the frequency of incidents and, when an incident does occur, to take operations necessary to resolve the incident as soon as is possible. As used herein, a team may be either an individual or a group of individuals. A large cloud provider may utilize a large number of such teams with a variety of capabilities. For a large cloud provider, teams may or may not exist within the same corporate organization as the cloud provider. In examples, the teams may be employees of the cloud provider. In other examples, the teams may be independent contractors. Or, in still other examples, the teams may be employees of third parties whose products or services interact with the cloud environment, such as an internet service provider.

In any event, each of these teams may possess specialized knowledge related to only a part of the cloud environment while possessing less knowledge about other parts of the cloud environment. Thus, even when a cloud provider employs or has access to a team of engineers that is capable of quickly resolving an incident, a cloud provider will first have to identify which of its many teams is the most capable of resolving the incident and will have to provide this team with the information necessary to resolve the incident as quickly as possible. Accordingly, aspects of the present disclosure relate to automated routing an incident to a team most capable of resolving the incident.

In examples, the cloud provider detects an incident and generates an incident description. In some examples, the cloud provider regularly monitors cloud components. Through this regular monitoring, the cloud provider may detect incidents and generate an incident description containing information about what was detected. As used herein, an incident description refers to any data describing an incident. An incident description may contain a natural language description of components functioning differently than intended or expected. Or an incident description may be a set of data demonstrating that a cloud component is functioning differently than expected. In addition to detecting incidents through regular monitoring, a cloud provider may detect an incident through customer reporting. For example, a cloud customer may experience a problem with the cloud computing service and may report this problem to the cloud provider. The customer's report may take the form of a support ticket and may contain information describing the customer's experience. This information may then be used as an "incident description" for purposes of incident routing.

For either a customer-reported incident or an incident detected through regular monitoring activity, the incident and any accompanying description thereof will generally be routed to the team that the cloud provider believes is most capable of resolving the incident (e.g., the team that is responsible for that incident). As described herein, a cloud provider utilizes team-specific scouts to distribute the solution and to improve the accuracy of automated incident-routing decisions. As used herein, a "scout" is a computer-based component of an incident-routing system and a "local scout" or a "team-specific scout" is a computer-based component associated with at least one team (e.g., a development team) or other group, such as a group of user IDs or user devices. In examples, a team-specific scout is created by or with input from a team with specialized knowledge about a part of the cloud environment. In response to receiving information related to an incident, a team-specific scout may utilize machine learning to generate a prediction about whether the team with which the scout is associated will be capable of resolving the incident. This prediction, referred to at times herein as an "incident-classification prediction" or an "incident routing prediction" may be a binary decision, such as a "yes" or "no" (or "1" or "0", or "positive" or negative") where "yes" indicates that the team-specific scout believes the team with which it is associated can address the incident and a "no" indicates that the team-specific scout does not believe the team with which it is associated can address the incident. Further, in addition to the prediction, the team-specific scouts may report a confidence score that relates to the prediction. A confidence score is an indication of the reliability of a prediction and/or an explanation for it. For example, a scout may report "yes" its associated team is capable of resolving the incident and the confidence score associated with that yes is 50% or some other value indicating a level of confidence. Or, in other examples, the prediction may not be a yes or no answer. For example the prediction may take the form of a natural language response containing a list of potential causes of the incident that might be helpful in routing the incident. Or, in another example, the prediction may be a numerical value indicating the likelihood that a team will be able to resolve an incident. Alternatively, the prediction may be multiple values, such as both a value indicating the likelihood that a team will be able to resolve an incident and a value indicating how quickly a team may be able to resolve an incident.

Other aspects relate to systems and methods for creating a team-specific scout. For example, teams may be provided with an easy-to-use framework for creating a team-specific scout to generate incident-classification predictions for that team. The easy-to-use framework may, in some cases, be designed so that teams without prior machine learning knowledge or expertise may nonetheless be able to create and train a team-specific scout. In an example, the framework is easy for teams to use because it prompts teams to provide certain information useful to create and train a team-specific scout.

It will be appreciated that aspects described herein provide various technical benefits. As an example, as compared to automated routing of incidents based on keywords or a rule-based approach, aspects of distributed, automated domain or expertise-specific incident routing exhibit lower overhead, lower latency, and higher accuracy than traditional methods of routing incidents for resolution. For example, a keyword- or rule-based approach struggles to accurately route incidents because the incidents and their causes constantly change over time. Moreover, a keyword- or rule-based approach is static and therefore does not consider the current state of the system when making incident-routing decisions. Accordingly, the aspects described herein achieve greater accuracy without the need to constantly update a central incident-routing solution. Moreover, a distributed system of scouts address the challenges of complex incident-routing decisions at least in part because team-specific scouts need only to adapt to changes to the team with which they are associated and its components, as opposed to constantly adapting to all changes to any team.

Aspects may also improve accuracy with only partial deployment. Thus, if only a single team were to implement a scout, it would improve incident-routing efficiency across the organization because any team-specific scout may be able to quickly "rule-out" teams that will not be capable of resolving an incident before that team is ever involved. For example, if a single team to which incidents were often misrouted implemented a scout, the scout would prevent misrouting of incidents to that team and, as a result, improve the cloud provider's incident-resolution speed and efficiency. As compared to human routing of incidents, the technical benefits are even more apparent. For example, there are simply too many components, too much data, and too much system complexity for a human to consistently make an accurate routing decision in the type of cloud environments discussed herein.

In examples, utilization of distributed team-specific scouts may lead to significant benefits. For instance, misrouted incidents can take up to ten times longer to resolve than incidents sent directly to the responsible team. Accurate incident routing, therefore, has the potential to eliminate hundreds of hours of wasted investigation time in a large and complicated cloud environment by reducing the amount of time it takes for an incident to be resolved. In some examples, each call to a team-specific scout takes only a few minutes, which is negligible compared to the time cloud providers often spend investigating incidents prior to routing them to a team. Moreover, because the solution is distributed, the team-specific scouts may be called in parallel (e.g., at the same time), such that a cloud provider may receive incident-routing recommendations or predictions from an entire network of team-specific scouts in only a few minutes.

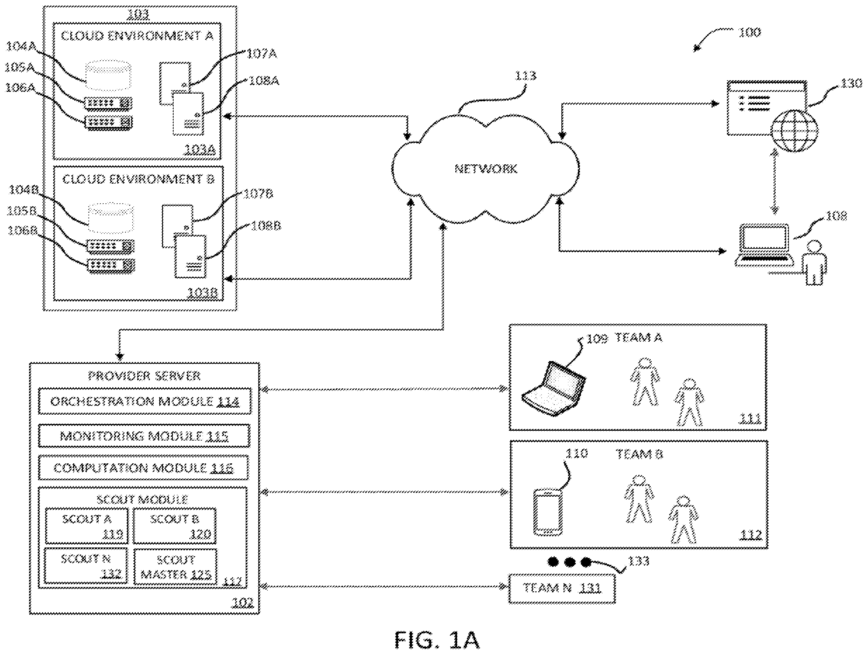

Figure 1A illustrates an overview of an example system for distributed, automated incident routing to in a cloud environment that is provided by an enterprise cloud service provider or cloud provider. In the system described herein, incidents are routed to the team/resources within the cloud provider who are most capable of (i.e., are "responsible" for) remedying the incident. Said another way, incidents are automatically routed to the team with the most expertise that is relevant to the particular aspects of the incident. As illustrated, system 100 comprises a cloud environment 103 provided by the enterprise cloud provider, which includes one or more cloud environments such as cloud environment A 103A and cloud environment B 103B. The cloud environment A 103A and cloud environment B 103B may be in the same or different physical locations. Each cloud environment 103 comprises cloud components. As used herein, cloud components include any hardware and/or software that operate within the cloud environment and/or are used to connect to or from the cloud environment 103, including without limitation, servers, server farms, data centers, computers, storage devices, physical or virtual switches, routers, access points, software load balancers, firewalls, fiber optics, services, software, operating systems, and other computing components and/or cloud infrastructure. For example, cloud environment A 103A includes without limitation storage devices 104A, switches 105A, routers 106A, and servers 107A and 108A. Cloud environment B 103B includes without limitation storage devices 104B, switches 105B, routers 106B, and servers 107B and 108B. Although not shown, cloud environments A 103A and B 103B may include any type and any number of cloud components.

A client/customer device 101 communicates with cloud environment 103 using a network 113, such as a local area network, a wireless network, or the Internet, or any combination thereof. In an example, client device 101 is any of a variety of computing devices, including, but not limited to, a mobile computing device, a laptop computing device, a tablet computing device, or a desktop computing device. It will be appreciated that while system 100 is illustrated as comprising one client device 101, any number of devices may be used in other examples. The customer device 101 may communicate with network 113 and/or the cloud environment 103 via a third party, such as internet service provider 130, or in any other number of ways.

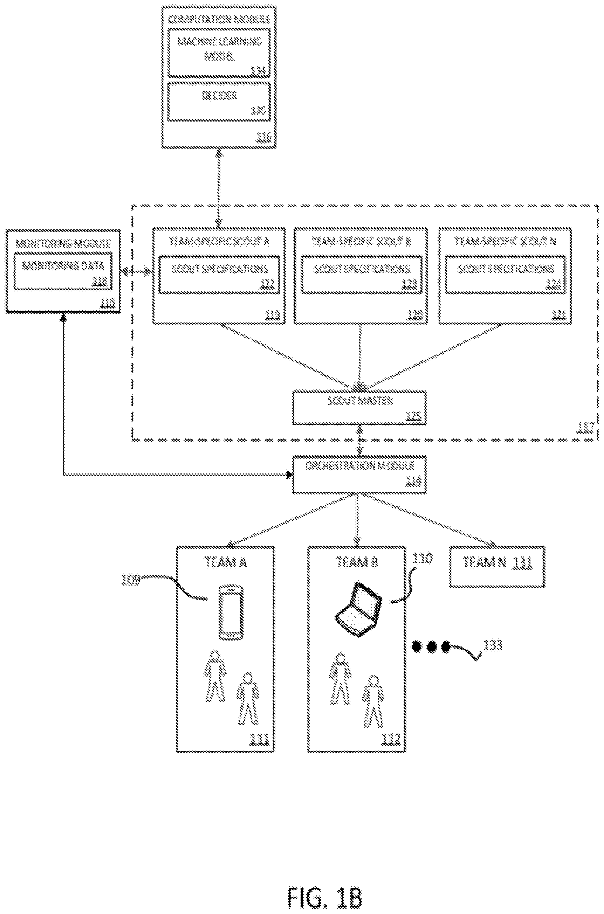

The system 100 also includes a cloud provider server 102, which may be part of the cloud environment 101 or may be separate from the cloud environment 101. Provider server 102 is illustrated as comprising orchestration module 114, monitoring module 115, computation module 116, and a scout module 117. These modules are discussed in more detail with reference to FIG. 1B. In Figure 1A, orchestration module 114, monitoring module 115, computation module 116, and scout module 117 are illustrated as being on a single cloud provider server 102. It will be appreciated, however, that these elements may exist on separate servers. In such an example, these modules may communicate using a network, such as a local area network, a wireless network, or the Internet, or any combination or variation thereof.

The system 100 also includes one or more teams who resolve incidents including, for example, Team A 111, Team B 112, and Team N 131. In examples, there can be any number of teams as illustrates by ellipses 133. The provider server 102 and/or its modules 114, 115, 116, 117 communicate with one or more developer team computers, such as computer 109 for Team A 111 and computer 110 for Team B 112, regarding incidents and incident resolutions. In an example, team device 109 is any of a variety of computing devices, including, but not limited to, a mobile computing device, a laptop computing device, a tablet computing device, or a desktop computing device. It will be appreciated that while system 100 is illustrated as comprising one team device 109, any number of devices may be used in other examples.

Within each the scout module 117, each team may have its own team specific scout, such as Scout A 119 for Team A 111, Scout B 120 for Team B 112, Scout N 132 for Team N 131, and so on. Further, the scout module 117 further includes a scout master 125 for assisting in automatic routing of incidents to the team responsible for resolving an incident, as described with reference to FIG. 1B.

Figure 1B illustrates an example of how aspects or modules of the automatic incident-routing system may interact with each other, whether located on the same provider server 102 or multiple provider servers 102 that communicate using a network as described above.

System 100 is illustrated as comprising orchestration module 114, monitoring module 115, computation module 116, and scout module 117.

Monitoring module 115 is responsible for monitoring the cloud environment for incidents, receiving incident reports from customers, storing incident reports, and/or storing monitoring data relating to incidents, among other functions. Monitoring module 115 communicates with cloud environment 103 using a network 113, such as a local area network, a wireless network, or the Internet, or any combination thereof. Monitoring module 115 detects when there is an incident in the cloud environment 103. An incident may include, for example, an individual cloud component (e.g., cloud component 104a) functioning differently than intended or expected. Alternatively or additionally, an incident may relate to interactions between multiple cloud components (e.g., cloud components 104-108) interacting differently than intended or expected. Alternatively or additionally, an incident may relate to one or more cloud components of a third party, such as ISP 130, functioning differently than intended or expected.

In some examples, the monitoring module 115 regularly monitors cloud components. Through this regular monitoring, the monitoring module 115 may detect incidents and generate an incident description containing information about what was detected. In other examples, a cloud provider may detect an incident through customer reporting. For example, a cloud customer may experience a problem with the cloud computing service and may report this problem to the cloud provider. The customer's report may take the form of a support ticket and may contain information describing the customer's experience. The customer reported incident information is routed to the monitoring module 115.

Monitoring module 115 accesses and, in certain cases, stores monitoring data associated with individual cloud components. In this example, monitoring module 115 comprises a store of monitoring data 118. The monitoring data 118 may include data that is routinely collected and is related to cloud components, such as cloud components 104-108 in Figure 1A, which are not pictured in Figure 1B but which may nonetheless be communicatively linked, directly or indirectly, to the monitoring module so as to allow for data monitoring and collection. Monitoring data that is routinely collected may include records of anomalies detected at cloud components, which may or may not qualify as an incident. For example, monitoring module 115 may record every time a switch buffer is full, which is monitoring data associated with the switch buffer cloud component, but which does not necessarily indicate an incident has occurred. Alternatively or additionally, the monitoring data 118 may include data that is not routinely collected but is instead collected only in response to detecting an incident either through system 100 or through a customer report. In one example monitoring data for a team responsible for the physical network components of a cloud system includes ping statistics, link-level drop statistics, switch-level drop statistics, canaries, device reboots, link loss status, packet corruption rate, SNMP and Syslogs, PFC counters, interface counters, temperature, and CPU usage, and customer error reports. It will be appreciated, however, that monitoring data will differ for teams responsible for different aspects of a cloud system. In examples, monitoring module 115 sends an incident description directly to one or more team-specific scouts, such as team-specific scouts 119, 120, 121, that are part of scout module 117.

The monitoring module 115 may also be communicatively linked (e.g., through network 113 or otherwise) to orchestration module 114. In other examples, in response to detecting an incident, monitoring module 115 may alert orchestration module 114 that monitoring module 115 has detected an incident. Monitoring module 115 may additionally send an incident description containing information about the detected incident to orchestration module 114.

Scout module 117 includes one or more team specific scouts 119, 120, 121 and a scout master 125. Team-specific scouts 119, 120, 121 receive incident descriptions and evaluate monitoring data to generate incident-classification predictions. Each team-specific scout may include scout specifications, such as scout specifications 122-124 for team-specific scouts 119-121, respectively. In examples, the scout specifications contain annotations to assist with accessing and processing monitoring data and incident descriptions. In examples, the annotations indicate where the scout can find the monitoring data. In another example, the annotation includes component associations of the monitoring data which may indicate, for example, that the monitoring data refers to a specific one or more cloud components. Annotations may also indicate how the monitoring data should be processed. These annotations may include indications of monitoring data type and monitoring data class. Monitoring data type may indicate, for example, that the monitoring data is either time series data or event data. Time series data may include data measured at regular intervals, while event data may include data occurring on an irregular basis. As an example, event data could be a syslog error message or an alert. Monitoring data class may indicate, as an example, that a certain set of monitoring data should be normalized using a certain baseline, which may correspond to the baseline of another, related set of monitoring data.

For a received incident description, team-specific scout 119 may identify a cloud component relevant to the incident based on scout specifications 122. Team-specific scout 119 may further identify, based on scout specifications 122, monitoring data relevant to the incident. Team-specific scout 119 may communicate with monitoring module 115 to access the monitoring data 118 identified as being relevant to the incident. Team-specific scout 119 may then process the accessed monitoring data based on scout specifications 122. Team-specific scout 119 may additionally be communicatively linked with computation module 116 such that the team-specific scout 119 may send (or cause monitoring module 115 to send) monitoring data 118 (either before or after processing) to computation module 116 for evaluation by a machine learning model. Sending (or causing to be sent) monitoring data 118 for evaluation may further entail utilizing a decider 135 to determine which machine learning model or models to use in evaluating the monitoring data 118.

In examples, a team-specific scout 119, 120, 121 receives an incident description and identifies a cloud component relevant to the incident. For example, the incident description may indicate that a given cluster in the cloud environment is experiencing problems connecting to a different storage cluster. In examples, the team-specific scout 119, 120, 121 includes scout specifications 122, 123, 124. Scout specifications may be contained in a configuration file or other similar format. Aspects of these scout specifications may be provided by the team with which the scout is associated, while other aspects of the scout specifications may be generic. The scout specifications may include component naming specifications, which the scout may use to extract cloud components from an incident description. In the example above, the scout may utilize the component naming specifications to determine that a cluster is relevant to the incident. In examples, the scout specifications include information about the topology or the dependency of cloud components. The team-specific scout may utilize this information about the topology or dependency of cloud components to identify cloud components relevant to the incident.

In examples, the team-specific scout may access monitoring data associated with a cloud component identified as being relevant to the incident. As discussed above, this monitoring data may be regularly collected and stored on the same server as the scout or may be collected and stored remotely from the server on which the scout operates. In either circumstance, the scout may rely on the scout specifications to identify the monitoring data associated with the relevant cloud component.

In examples, computation module 116 generates an incident-response prediction for each team-specific scout 119, 120, 121. An incident response prediction may be an indication that a team (e.g., team A 111) is unlikely to be capable of resolving an incident. Or, alternatively, an incident-response prediction may be an indication that team A 111 is likely to be capable of resolving an incident. In examples, the computation module 116 stores a machine learning model. The machine learning model may be trained to generate an incident response prediction for each of teams A 111, B 112, and N 131. In examples, the computation module 116 stores more than one machine learning model. The scout module 117 may decide which machine learning model to use to generate an incident-response prediction for team 111. In other instances, the scout module 117 may utilize multiple machine learning models to generate an incident-response prediction for a team 111.

In examples, the team-specific scout utilizes a machine learning model within the computation module to generate an incident-classification prediction. In some examples, the machine learning model operates on the same server as the scout while, in other examples, the machine learning model is stored and utilized remotely from the server on which the scout is stored. Further, in examples, the scout may have multiple machine learning models of different types from which to choose to evaluate the monitoring data and generate a prediction. One example machine learning model that may be available to the scout is a Random Forest (RF) machine learning model. In certain implementations, an RF model is able to learn complex relationships between incidents, the monitoring data a team collects, and whether the team is capable of resolving an incident. Another example machine learning model that may be available to the scout is a modified Change-Point-Detection (CPD+) model. In examples, this CPD+ model may apply only to time-series data. Although traditional change point detection models may also be available, a modified model may be preferable because it is less likely to generate false positives. This CPD+ model may, in some instances, utilize its own RF model to learn whether detected change points are due to component failures or are false positives. In this way, the CPD+ model may be trained on a set of data sufficient to learn which combinations of change points are likely to point to failures compared to combinations that are likely to generate false positives. In an example, the input to this RF training model is the average number of change points per component type and monitoring data in the cluster for a given incident. It will be appreciated that other machine learning approaches are possible, such as OneClassSVM or reinforcement learning. In some examples, though, a bag of words model is beneficial due to its simplicity.

Computation module 117 may, in some instances, decide which machine learning model to use to generate an incident-classification prediction. As used herein, a "decider" refers to an aspect of an incident-routing system responsible for making this decision. In an example, the decider defaults to using certain machine learning models, such as an RF model, based on the accuracy of some machine learning models relative to other models. In another example, the decider uses a meta-learning approach for choosing one or more machine learning models to utilize. For instance, the decider may be trained on a bag-of-words model to create a training set, where the training set applies labels to incident descriptions based on which machine learning model is most likely to generate an accurate incident-classification prediction. In one example training approach, the decider learns by identifying key words in the incident description and the words' frequency. However, it will be appreciated that other training methods may be implemented to train the decider using a meta-learning approach.

In examples computation module 117 consists of an offline and an online component. The offline component continuously trains the machine learning models using a variety of suitable training techniques or programs, such as Spark. Additionally, the offline component may be responsible for re-training and versioning of machine learning models. Once trained, machine learning models may be stored in a storage system where they can be loaded by the online component. In an example, the online component provides an API interface, such as a REST interface, which can be called by team-specific scouts to evaluate monitoring data and generate incident-classification predictions.

Team-specific scout 119 may then receive an incident-classification prediction from computation module 116. Although Figure 1B is illustrated with only team-specific scout 119 being communicatively linked to monitoring module 115 and computation module 116, it will be appreciated that team-specific scouts 120 and 121 may be communicatively linked to monitoring module 115 and computation module 116 in the same manner. Thus, team-specific scouts 120 and 121 may proceed according to the process described above with respect to team-specific scout 119. In such an example, each team-specific scouts 119-121 may receive an incident-classification prediction from computation module 116 for a given incident description. In this example, team-specific scouts 119-121 may then provide an incident-classification prediction to scout master 125.

Scout master 125 receives predictions and may then make a determination about where an incident should be routed based on the received incident-classification predictions. In examples, making this determination includes comparing confidence ratings received with the incident-classification prediction from team-specific scouts 119-121. Once a determination is made, scout master 125 may provide an incident-routing recommendation to orchestration module 114.

Aspects of the present disclosure additionally relate to receiving multiple incident-classification predictions and determining how to route an incident based on the multiple incident-classification predictions. Aspects of the incident-routing system and methods disclosed herein involve a distributed system of team-specific scouts 119-121 to evaluate on a team-by-team basis each team's likelihood of being able to resolve an incident quickly and efficiently. Accordingly, aspects of the system and methods also include receiving multiple incident-classification predictions from multiple team-specific scouts 119-121 and making an incident-routing determination on the basis of the incoming predictions. In an example, each incident description is sent to each existing team-specific scout 119-121 in the distributed incident-routing system. For an incident description, some team-specific scouts 119-121may return a positive incident-routing prediction, while others may return a negative incident-routing prediction. In an example, these predictions are received by a "scout master" 125 responsible for receiving and processing incident-classification predictions.

A scout master 125 may receive only a single positive incident-routing prediction. In such an instance, the scout master 125 provides an incident-routing recommendation that indicates that the incident should be routed to that team. In another instance, however, the scout master 125 may receive more than one positive incident-routing prediction. In this example, the scout master 125 determines that one or more of the teams returning a positive incident-routing prediction is most capable of resolving an incident quickly and efficiently. To make such a determination, the scout master 125 compares the positive incident-routing predictions. Comparing the predictions may include, in an example, comparing confidence ratings or values provided by the team-specific scouts 119-121. Confidence ratings may indicate a team-specific scout's degree of certainty regarding its incident-classification prediction. A confidence score could be based on a number of factors including, without limitation, the quality of the monitoring data, the level of detail in the incident description, the type of monitoring data, the type of machine learning model, historical incident-routing data (e.g., the strength of previous indicators used in making incident-classification predictions and the similarity of those indicators to the monitoring data for the present incident), or any other information relevant to incident-routing decisions. A confidence score may be a single numerical value associated with an incident-classification prediction. In another example, a confidence rating could be several numerical values, each reflecting a different aspect of the confidence rating. Based on the information included with an incident-classification prediction (e.g., a confidence rating), a scout master 125 may receive multiple positive incident-classification predictions and determine that a single one of the teams providing a positive prediction is the most likely to resolve an incident quickly and efficiently. Accordingly, a scout master 125 may provide an incident-routing recommendation indicating, based on its comparison of predictions, to which team an incident should be routed.

After receiving an incident-routing recommendation from scout module 117, orchestration module 114 may then cause an incident to be routed to a team device, such as team device 109 or 110. In examples, scout module 117 communicates with orchestration module 114 to assist in determining to which team device to route an incident. Scout module 117 may indicate to orchestration module 114 that an incident should be routed to team device 109. Alternatively, scout module 117 may indicate to orchestration module 114 that the incident should not be routed to team device 109. In other examples, scout module 117 may provide to orchestration module 114 multiple indications that an incident should or should not be routed to multiple team devices 109 and 110. Orchestration module 114 may use these indications to determine to which team device to route an incident.

As illustrated, team device 109 is associated with team A 111 and team device 110 is associated with team B 112. Accordingly, an incident-routing recommendation indicating that team A 111 is most likely to be able to resolve an incident quickly and efficiently, orchestration module may route the incident to team device 109. Routing an incident to a team device may include, for example, causing a notification to be displayed on team device 109. Alternatively, routing the incident may include sending (e.g., over a network) information associated with an incident (e.g., an incident description, monitoring data, etc.) to team device 109. However, it will also be appreciated that there are many other ways of routing an incident to a team device 109 in such a way as to alert team 111 that an incident is being routed for resolution.

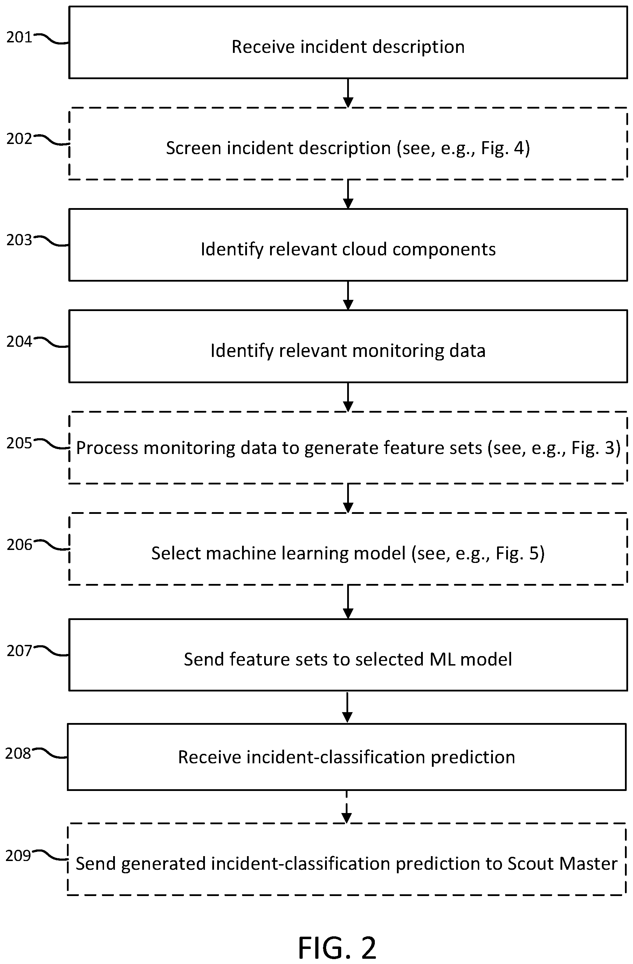

Figure 2 illustrates an overview of an example method for generating an incident-classification prediction. The example method provided in Figure 2 is performed by one or more of the team-specific scouts, such as team-specific scout 119 in Figure 1B. In examples, aspects of method 200 are performed by a provider server, such as a provider server 102 in Figure 1.

Method 200 begins at operation 201, where an incident description is received by a team-specific scout (e.g., team specific scouts 119-121). An incident description may contain, among other things, an account of a perceived problem experienced by a cloud customer. In another example, an incident description contains information about an incident detected by routine monitoring activity, such as monitoring conducted by monitoring module 115. Below is an example of what one such incident description might include:

| |
|---|
| VM X.c10.dc3 in |
| cluster c10.dc3 is |
| experiencing problem |
| connecting to storage |
| cluster c4.dc1 |

This example description indicates that a certain virtual machine in a certain cluster is experiencing problems connecting to a different storage cluster. It will be appreciated, however, that the incident description could contain any information and data about an incident.

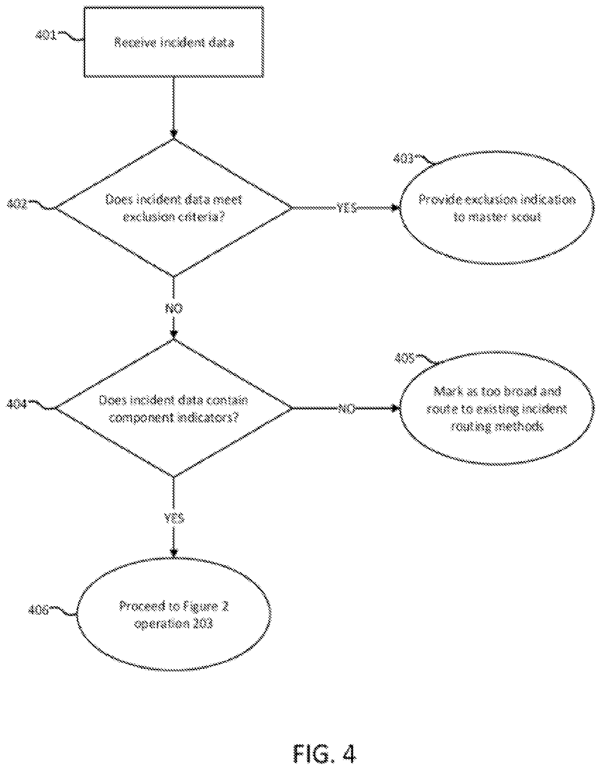

The method 200 optionally continues at operation 202, where the team-specific scout screens incident descriptions according to screening criteria associated with its scout specifications. Screening incidents provides quick responses when it is immediately apparent to a team-specific scout that the team with which the scout is associated will not be responsible for an incident or that the team-specific scout will not, for any number of reasons, be able to generate an accurate incident-classification prediction from the provided incident description. An example method of screening incident descriptions prior to machine learning evaluation is described in more detail in Figure 4.

The method 200 continues at operation 203, where the team-specific scout identifies cloud components (e.g., cloud components 104A-108A, 104B-108B) that may be relevant to the incident. In some instances, the relevant cloud components may be explicitly identified in the incident description such that the team-specific scout can easily extract the relevant cloud components. In other instances, the team-specific scout uses its scout specifications (e.g., scout specifications 122-124) to identify the relevant cloud components. In an example, the scout specifications include component naming specifications. The component naming specifications may be written in the form of regular expressions, but it will be appreciated that component naming specifications may be included in the scout specifications in a variety of alternative forms. Below are examples of component naming specifications in the form of regular expressions:

| |
|---|
| let VM = <regex>; |
| let server = <regex>; |
| let switch = <regex>; |
| let cluster = <regex>; |
| let DC = <regex>; |

In addition to component naming specifications, the scout specifications may also contain information relating to the topology of or dependency between cloud components. For example, the dependency information may indicate that a certain storage cluster is responsible for handling the traffic for a particular virtual machine or that a certain switch operates along the path of the traffic for a particular virtual machine. The team-specific scout may use this information relating to the topology or dependency between cloud components to assist in identifying the cloud components that may be relevant to a given incident. For example, the incident description might contain information indicating that one cloud component is functioning differently than expected. Because the cloud component may be dependent on other cloud components in the cloud environment, though, the cloud component may not be relevant to the incident. However, the cloud components relevant to the incident may be connected via cloud topology or dependency. Thus, at operation 203, the team-specific scout may use the scout specifications to identify such a cloud component that may be relevant to the incident despite not being explicitly included in the incident description.

At operation 204, the team-specific scout identifies monitoring data relevant to the incident. In examples, the monitoring data relevant to the incident is directly associated with the cloud components identified as being relevant to the incident. In other examples, though, the monitoring data relevant to the incident is not directly associated with the cloud components identified as being relevant to the incident. In either example, the team-specific scout may use the scout specifications to identify the monitoring data relevant to the incident. The scout specifications may contain a variety of information that the team-specific scout may use to identify monitoring data relevant to the incident. The scout specifications may include, among other things, information about the location of monitoring data, component associations of monitoring data, the type of the monitoring data, and the class of the monitoring data. The scout specifications may further include information related to processing the monitoring data, such as, for example, instructions for filtering or organizing the monitoring data. For example the scout specifications might contain information about how to filter out any syslog data considered to be noise so as to improve the quality of the monitoring data. Below is one example of information about monitoring data that may be included in a scout specification:

| |
|---|
| ```
            MONITORING dataset_1 =
                  CREATE_MONITORING(resource_locator,
                                        {cluster=Y,server=Z},
                                        TIME_SERIES, CPU_UTIL);
``` |

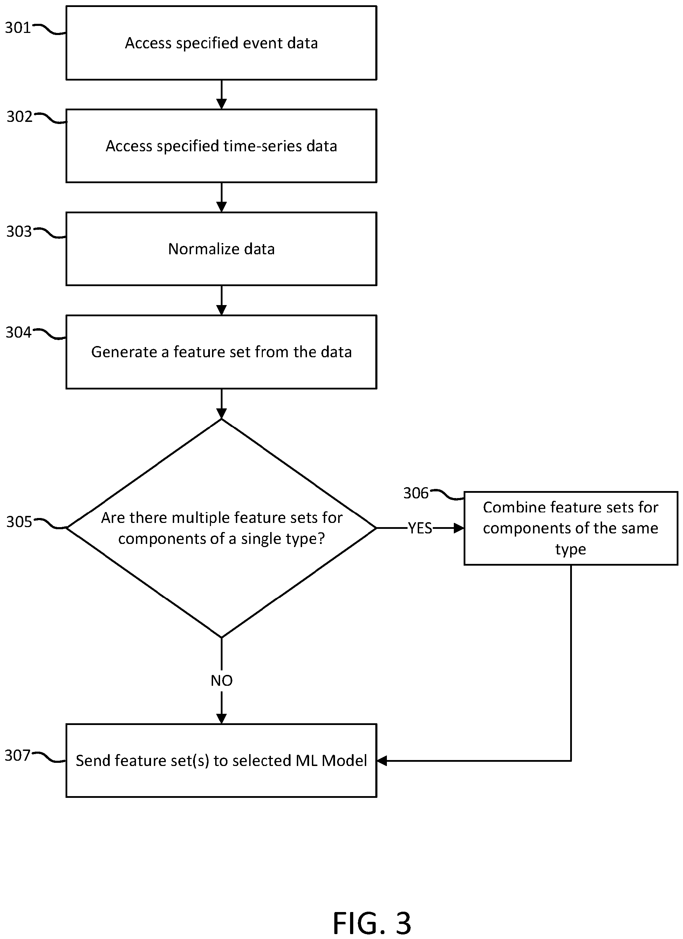

At optional operation 205 of method 200, the team-specific scout processes the monitoring data identified as being relevant to the incident. In examples, the team-specific scout processes the monitoring data to make it easier for a machine learning model to evaluate the monitoring data. In other examples, processing the monitoring data removes unimportant data. In still other examples, processing the monitoring data involves combining different aspects of the monitoring data such as, for example, monitoring data from multiple components of the same type. An example method for processing monitoring data according to scout specifications is provided in Figure 3, which is described in greater detail below.

At optional operation 206 of method 200, there may be more than one machine learning model (e.g., machine learning model 134) available for evaluating the monitoring data and generating an incident-classification prediction. In certain instances, one machine learning model may be more likely to generate an accurate incident-classification prediction than another. For example, if there is not enough training data available, a supervised learning model (e.g., a random forest) may not be able to accurately learn how to route a given incident. Thus, in examples, operation 206 involves using a decider (e.g., decider 135) to decide which of the available machine learning models to utilize. Some available machine learning models may be more or less likely to generate an accurate incident-classification prediction depending on the type of monitoring data relevant to a given incident. As an example, an RF model may be less likely to generate an accurate incident-classification prediction when an incident is a new incident-that is, an incident not previously encountered by the machine learning model-because there may not be enough training data for a supervised machine learning model. In such a circumstance, a non-supervised machine learning model (e.g., CPD+) may be more likely to generate an accurate incident-classification prediction. Thus, at operation 206, the team-specific scout may decide which one of the one or more available machine learning models is most likely to generate an accurate incident-classification prediction. In some examples, this decision is based on whether an incident is new or uncommon, with non-supervised models being more capable of handling such incidents. Accordingly, in operation 206, an anomaly detection algorithm (e.g., OneClass SVM) may be used to determine whether an incident is new or uncommon.

In examples, the team-specific scout uses a meta-learning approach to decide to which one of the one or more available machine learning models to send the monitoring data. A meta-learning approach may, for example, be trained using a training set where samples of monitoring data have been labeled according to which machine learning model generated an accurate incident-classification prediction. Thus, for future incidents, a meta-learning model will be trained to decide which machine learning models are likely to generate accurate incident-classifications. Optionally, the meta-learning model may be programmed to prefer certain machine learning models over others based on certain determinations about the incident. For example, the meta-model may be programmed to prefer an RF machine learning model over a CPD+ model for all incidents that are not determined to be new or uncommon. In such an example, a CPD+ model may only be utilized when it is determined that the RF model is unlikely to generate an accurate incident-classification prediction such as, for example, when the incident is anomalous. In still other examples, the results of the machine learning model may be "boosted" by utilizing more than one machine learning model and therefore taking advantage of the strengths of each of the available models to strengthen the incident-classification prediction.

Although the discussion above contemplates the team-specific scout deciding to which machine learning model to send the monitoring data relevant to the incident, it will also be appreciated that the team-specific scout may send the monitoring data to a separate module, such as the computation module 116 in Figures 1A and 1B, without deciding which machine learning module is most likely to generate an accurate incident-classification prediction. In such an example, the computation module may have access to one or more machine learning modules and may utilize a selected one of the one or more machine learning modules based on a determination that the selected machine learning module is most likely to generate an accurate incident-classification prediction. In this example, the computation module may utilize a meta-learning approach similar to the one discussed above with respect to the team-specific scout.

At operation 207 of method 200, the team-specific scout sends the monitoring data (or feature sets generated from the monitoring data) to be evaluated by at least one machine learning model. If there is more than one machine learning model available, the team-specific scout may send it to only one of the models selected at optional operation 206. Alternatively, the team-specific scout may generate an enhanced (or "boosted") prediction by sending feature sets to more than one machine learning model, thereby taking advantage of the strengths of more than one machine learning model. In the example depicted in Figure 2, the monitoring data has been processed by the team-specific scout by generating feature sets. However, it will be appreciated that the team-specific scout may send the monitoring data to be evaluated by a machine learning model without first processing the monitoring data. It will be appreciated that the machine learning model may be stored on the same server as the team-specific scout or, in other instances, may be stored on a different server. In either event, the team-specific scout sends monitoring data to the machine learning model for evaluation.

At operation 208 of method 200, a team-specific scout receives machine learning results from the selected machine learning model. As discussed, the machine learning model may be located in the computation module or may be included within the scout module. In either event, the team-specific scout receives machine learning results. The machine learning results provide an indication of whether the team with which the team-specific scout is associated is likely to be responsible for an incident. Thus, the team specific scout receives an incident-classification from the machine learning model.

An incident-classification prediction may be a "yes" or "no," where "yes" indicates that the team-specific scout believes the team with which it is associated can address the incident and a "no" indicates that the team-specific scout does not believe the team with which it is associated can address the incident. Or, in other examples, the prediction may not be a yes or no answer and may be a numerical value or a natural language description, as discussed above. In some examples, a negative incident-classification prediction may contain information that may help determine which team it believes can address the incident.

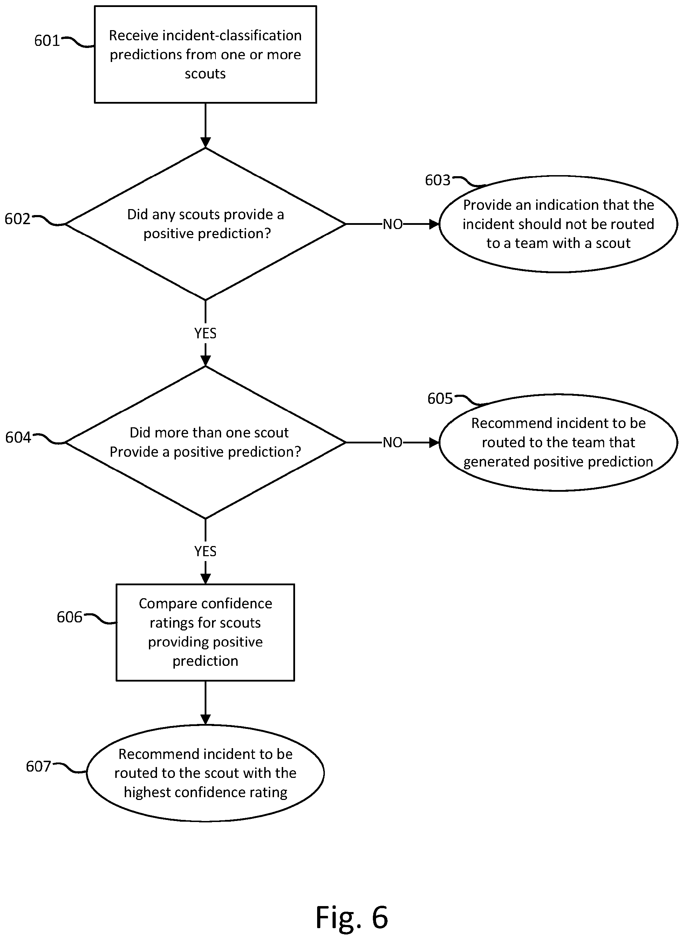

At optional operation 209 of method 200, team-specific scout sends its incident-classification prediction to a prediction aggregator or scout master. Prediction aggregator or scout master is responsible for receiving incident-classification predictions from a plurality of team-specific scouts and evaluating the predictions from the scouts to make an incident-routing decision. Aspects of the scout master are discussed in more detail with regard to Figure 6, below.

Figure 3 illustrates an overview of an example method for processing monitoring data identified as being relevant to an incident. It will be appreciated that there are many ways in which a team-specific scout may process monitoring data. It will further be appreciated that the team-specific scout's processing of monitoring data may proceed according to instructions provided in the scout specifications or according to some other approach. In some examples, a machine learning model will be more likely to generate an accurate incident-classification prediction if the monitoring data provided as input to the machine learning model is processed in a certain manner, such as by method 300 illustrated in Figure 3.

Method 300 begins at operation 301, where a team-specific scout (e.g., team specific scout 119) accesses monitoring data identified as being relevant to an incident. As discussed above, the identification of relevant monitoring data may be based on the scout specifications. In some examples, the monitoring data identified as being relevant to an incident includes multiple types of data. Monitoring data may include, for example, event data and time-series data. At operation 301, the team-specific scout accesses event monitoring data identified as being relevant to an incident. At operation 302, the team-specific scout accesses time-series monitoring data identified as being relevant to an incident. At operation 303, the team-specific scout normalizes the monitoring data. In aspects, normalizing the monitoring data will improve the likelihood that a machine learning model is able to generate an accurate incident-classification prediction because it ensures that different sets of monitoring data are providing information relative to the same baseline, which could help to avoid errors upon evaluation by a machine learning model. In aspects, normalizing the monitoring data allows for combination of monitoring data.

At operation 304, the team-specific scout generates a feature set from the accessed data. A feature set, as used herein, is an aggregated set of data. In an example, a feature set is specific to a single cloud component. Thus, for each cloud component identified as being relevant to an incident, the team-specific scout will access monitoring data and generate a single feature set for that cloud component. In another example, the team-specific scout generates a single feature set for each type of cloud component of the cloud components identified as being relevant to an incident. For monitoring data that is time series data, generating a feature set may include normalizing the data and calculating a variety of statistics for the dataset. These statistics may include, without limitation: mean, standard deviation, minimum, maximum, 1^{st}, 10^{th}, 25^{th}, 50^{th}, 75^{th}, 100^{th}, and 99^{th} percentiles during a given look-back time. The look-back time may depend on the cloud component, be specified in the scout specifications, be a fixed time period, or may be any other time amount depending on the incident. For monitoring data that is event data, generating a feature set may include counting events per type of alert. In examples, it also includes counting events per component. In examples, it may be beneficial for the generated feature sets have a consistent size. Accordingly, processing of monitoring data may include transforming accessed datasets to be the same size as another set of monitoring data identified as relevant to an incident.

In this example, at determination 305, the team-specific scout determines whether there are multiple features sets for components of a single type. For example, if more than one switch has been identified as being relevant to an incident, there may be a feature set for each of the switches. Thus, if the determination is "YES," the flow proceeds to operation 306. At operation 306, features sets for components of the same type are combined so that there will only be a single feature set for each type of component. In some examples, feature sets are combined at operation 306 by averaging the features sets. However, it will be appreciated that there are different ways to combine feature sets into a single feature set, such as aggregating the data for multiple cloud components and computing a variety of statistics for the aggregated data, such as mean, standard deviation, minimum, maximum, 1^{st}, 10^{th}, 25^{th}, 50^{th}, 75^{th}, 100^{th}, and 99^{th} percentiles during a given look-back time. Once the feature sets have been combined, the flow proceeds to operation 307, where the team-specific scout sends feature sets to a machine learning model capable of using the feature sets to generate an incident-classification prediction. Alternatively, if the determination is "NO" at determination 305 (i.e., it is determined that there are not multiple feature sets for any single type of component), the flow proceeds directly to operation 307.

Although each of the above operations 301-307 of method 300 is described as being performed by a team-specific scout, it will also be appreciated that one or more of the included operations 301-307 may be performed by another component. For example, operation 304 may be performed by monitoring module (e.g., monitoring module 115), which, in certain examples, collects and stores the monitoring data. In such an example, the monitoring module may send the features sets directly to a machine learning model for evaluation or, alternatively, may send the generated feature set to a team-specific scout, which sends the feature set to a machine learning model for evaluation.

Figure 4 illustrates an example method for screening incident descriptions. Method 400 in Figure 4 may optionally be performed between operations 201 and 203 of method 200 in Figure 2. In examples, screening incident descriptions reduces the number of incidents evaluated by a team-specific scout. In the example method 400, incident descriptions are screened to determine whether the incident descriptions meet exclusion criteria and to determine whether the incident description contains sufficient information for a machine learning model to generate an incident-classification prediction for the incident. At operation 401, the team-specific scout receives information about an incident (e.g., an incident description). At determination 402, the team-specific scout determines whether the incident description meets exclusion criteria. In some examples, exclusion criteria is explicit, such as, for example, a rule specifying that incident descriptions containing certain keywords or components should not be routed to the team with which a team-specific scout is associated. Below is one example of such explicit exclusion criteria:
EXCLUDE server = <regex>; or
EXCLUDE TITLE = <regex>; or
EXCLUDE BODY = <regex>;

Exclusion criteria may, alternatively, be used to ensure a certain incident-routing decision despite monitoring data that may indicate a contrary decision. For example, exclusion criteria may indicate that for a given link with one switch in the purview of a first team and a second switch in the purview of a second team should be routed to the first team despite indications in the monitoring data that the second team may be responsible. In either example, the exclusion criteria may be included in the scout specifications or may be learned after implementation of the team-specific scout. If the answer at determination 402 is "YES" (i.e., it is determined that the incident description meets exclusion criteria), the flow proceeds to 403, where the team-specific scout provides an indication that an incident should not be routed to the team with which the team-specific scout is associated. In examples, this indication is provided to a scout master, which provides this indication to an orchestration module. In other examples, this indication is provided directly to an orchestration module.

If the answer at determination 402 in "NO" (i.e., it is determined that the incident description does not meet exclusion criteria), the flow proceeds to 404, where the team-specific scout determines whether the incident description contains sufficient information for a machine learning model to generate an incident-classification prediction. One example of this determination includes determining whether the incident description contains information from which the team-specific scout would be able to identify cloud components relevant to the incident, as described above with respect to operation 203 of Figure 2. For example, if the incident description contains a reference to cloud components involved in the incident, the team-specific scout will likely be able to identify at least one cloud component relevant to the incident. If the team-specific scout is able to identify at least one cloud component relevant to the incident, it is more likely that a machine learning model will be able to generate an accurate incident-classification prediction because the machine learning model will be able to use the monitoring data for the identified cloud component as input to evaluate the incident. In contrast, if the incident description does not contain an indication of which cloud components may be relevant to the incident or does not contain any information that the team-specific scout could use to identify such relevant cloud components, the team-specific scout will not be able to access monitoring data for the identified cloud components and will not be able to provide the accessed monitoring data to a machine learning model. Accordingly, in the absence of sufficient information in the incident description, the team-specific scout and the machine learning model are unlikely to be useful in generating an accurate incident-classification prediction. Thus, if the answer at determination 404 is "NO" (i.e., the incident description does not contain sufficient information from which to identify a relevant cloud component), flow proceeds to 405, where the team-specific scout marks the incident description as too broad. When an incident description is marked as too broad, the orchestration module may use existing incident-routing methods (e.g., human classification) or, alternatively, may collect more information and attempt to provide a more detailed incident description to the team-specific scout. If the answer at determination 404 is "YES" (i.e., the incident description contains sufficient information from which to identify a cloud component relevant to the incident), flow proceeds to operation 406 of Figure 4, where the team-specific scout proceeds to identify monitoring data relevant to the incident.

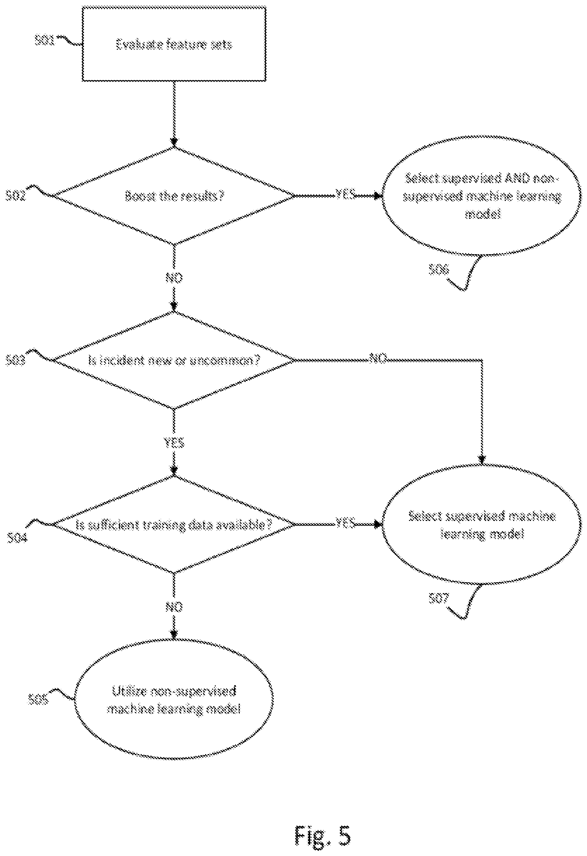

Figure 5 illustrates an example method 500 for selecting a machine learning model to utilize for a given incident. As previously discussed, certain types of machine learning models may perform better for certain types of incidents. For instance, a supervised machine learning model may exhibit superior performance for all incidents that are not anomalous-that is, incidents that are not new or uncommon. Thus, it may be beneficial to utilize a supervised machine learning model for all incidents that are not anomalous, but to use a non-supervised machine learning model for all incidents that are anomalous. Method 500 may optionally be performed at operation 206 of method 200. In such an example, method 500 may be performed by a team-specific scout (e.g., team-specific scout 119) or may be performed by a decider (e.g., decider 135). In this example method 500, the operations are performed by a decider.

At operation 501 of method 500, the decider evaluates the monitoring data and/or the feature sets generated from the monitoring data. Evaluating the feature sets may include comparing the feature sets to historical data of prior incidents. At determination 502, the decider determines whether to boost the results. As used herein, to boost the results means to utilize more than one machine learning model in order to take advantage of the strengths of each of the available machine learning models. If the answer at determination 502 is "YES" (i.e., the result will be boosted), flow proceeds to operation 506, where the decider selects both a supervised and a non-supervised machine learning model to be utilized in evaluating the machine learning results. If the answer at determination 502 is "NO" (i.e., the result will not be boosted), flow proceeds to determination 503.

At determination 503, the decider determines whether the incident is anomalous-that is, whether the incident is new or uncommon relative to prior incidents. This determination may be made by utilizing any anomaly detection algorithm. In an example determination 503 is made using OneClassSVM based on historical incident data. OneClassSVM may compare feature sets of a present incident to historical incident data to determine whether the present feature sets contain outliers. If the answer at determination 503 is "NO" (i.e., the incident is not new or uncommon), the decider selects a supervised machine learning model to be utilized. If the answer at determination 503 is "YES" (i.e., the incident is new or uncommon), flow proceeds to determination 504. At determination 504, the decider determines whether sufficient training data is available. Sufficient training data is available when historical incident data would allow a supervised machine learning model (e.g., a random forest model) to "learn" how to route the present incident based on historical data. While training data is less likely to be available for a new or uncommon incident, it may nonetheless be sufficient for a supervised machine learning model. Thus, if the answer at determination 504 is "YES" (i.e., there is sufficient training data available), method 500 proceeds to operation 507, where the decider selects a supervised machine learning model to be utilized for the incident. If the answer at determination 504 is "NO" (i.e., there is not sufficient training data available), method 500 proceeds to operation 505, where the decider selects a non-supervised machine learning model to be utilized for the incident.

Figure 6 illustrates an example method 600 for routing incidents. It will be appreciated that a cloud provider will often have many teams, each of which could create and implement a team-specific scout for incident-routing purposes. For the cloud provider, accuracy and speed of incident routing will improve with more teams creating and implementing a team-specific scout. Thus, aspects of the disclosure relate to methods for receiving incident-classification predictions from multiple team-specific scouts and, based on the incident-classification predictions, routing an incident to a single team determined to be most likely to resolve an incident. In an example, receiving incident-classification predictions and making an incident-routing decision is performed by a scout master, such as scout master 125 in Figure 1B. In other implementations, though, these tasks may be performed by an orchestration module, such as orchestration module 114. In this Figure 6, the operations are discussed as being performed by a scout master (e.g., scout master 125), for example purposes only.

Method 600 begins at operation 601, where the scout master receives an incident-classification prediction from multiple team-specific scouts (e.g., team-specific scouts 119-121). As discussed above, the incident-classification prediction may be a "yes" or "no," where "yes" indicates that the team-specific scout has determined that the team with which it is associated can address the incident and a "no" indicates that the team-specific scout has determined that the team with which it is associated cannot address the incident. Or, in other examples, the prediction may not be a yes or no answer. For example, the prediction may be a natural language description identifying potential causes of the incident that might be helpful in routing the incident or it may be a numerical value indicating the likelihood that a team will be able to address an incident. Method 600 continues to determination 602, where the scout master determines whether any of the team-specific scouts from which it received an incident-classification prediction generated a positive incident-classification prediction. As used herein, a positive incident-classification prediction is one that indicates that the team with which the team-specific scout is associated is likely to be able to resolve the incident. If the answer at determination 602 is "NO" (i.e., that the scout master did not receive a positive incident-classification prediction from any of the team-specific scouts), it suggests to the scout master that none of the teams for which the scout master received predictions are likely to be able to resolve the incident. Thus, it is likely that the incident should not be routed to any of those teams and should instead be routed to a team without a team-specific scout. A team without a team-specific scout could be a team within the organization of the cloud provider. A team without a team-specific scout could also be a team outside of the organization of the cloud provider, such as a team within the organization of an internet service provider or some other third party potentially responsible for resolving the incident. Accordingly, at operation 603, the scout master provides an indication to the orchestration module that the incident should not be routed to any teams with a team-specific scout. Based on receiving such an indication, the orchestration module may then determine, using different methods, how to route the incident.

If the answer at determination 602 is "YES" (i.e., that the scout master did receive a positive incident-classification prediction from at least on team-specific scout), the flow proceeds to determination 604, where the scout master determines whether it received more than one positive incident-classification prediction. If the answer at determination 604 is "NO" (i.e., that the scout master received only one positive incident-classification prediction), flow proceeds to operation 605, where the scout master sends an indication to the orchestration module that the incident should be routed to the team associated with the team-specific scout that generated a positive incident-classification prediction.

In other instances, the scout master will receive more than one positive incident classification prediction. In examples, each team-specific scout operates independently of other team-specific scouts. In other words, the team-specific scouts are a distributed incident-routing solution. In some examples, because the team-specific scouts are a distributed solution, more than one team-specific scout generates a positive incident-classification prediction. Thus, if the answer at determination 604 is "YES" (i.e., that the scout master received more than one positive incident-classification prediction), flow proceeds to operation 606, where the scout master compares confidence ratings for each of the received positive incident-classification predictions. The confidence ratings may be useful in determining which team, of the multiple teams potentially capable of resolving the incident, will be most likely to be able to resolve the incident quickly and efficiently. Accordingly, the scout master may compare the confidence scores to make this determination. Then, method 600 proceeds to operation 607, where the scout master sends to an orchestration module (e.g., orchestration module 114) an indication that the incident should be routed to the team associated with the team-specific scout from which the scout master received a positive incident-classification prediction with the highest confidence rating.

Illustrative example scenarios of this type of determination process are provided below:

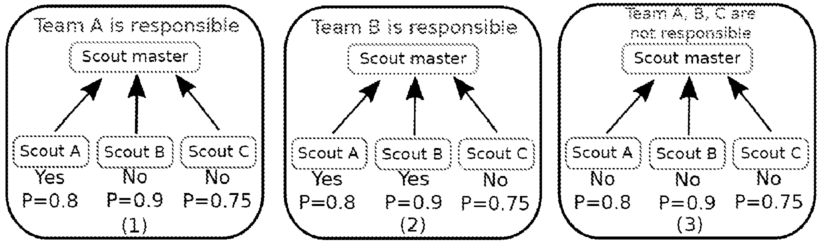

In the first example, the scout master determines that Team A is responsible for an incident because the team-specific scout associated with Team A was the only team-specific scout returning a positive prediction. In the second example, the team-specific scouts associated with teams A and team B both generated a positive prediction. Thus, the scout master compares the confidence scores for scout A and scout B and determines that team B is responsible for the incident based on the comparison. Finally, in the third example, none of the team-specific scouts generate a positive prediction. Thus, the scout master determines that none of the teams associated with the team-specific scouts are responsible for the incident. Although these examples depict three team-specific scouts A-C, it will be appreciated that scout master may receive predictions from any number of scouts, such as team-specific scouts A-N 119-121 in Figures 1A and 1B.

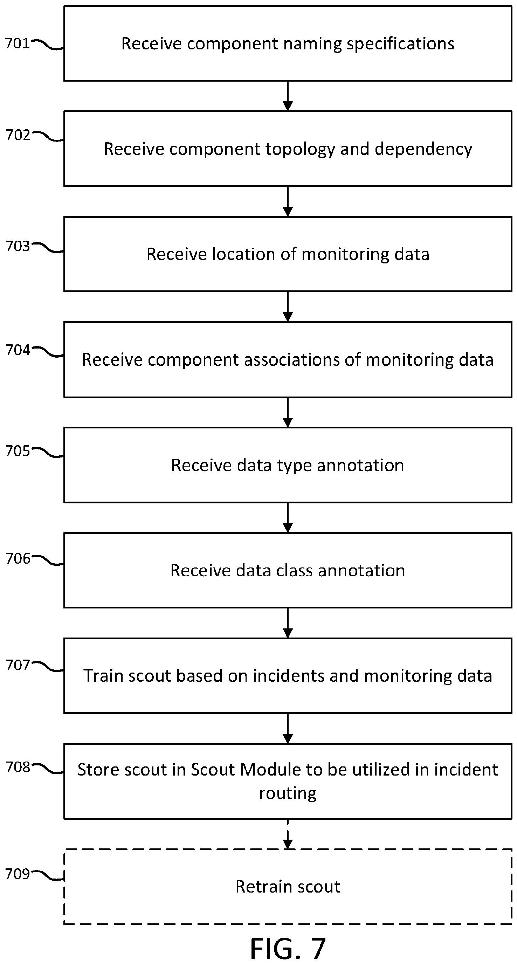

Figure 7 illustrates an example method 700 for creating a team-specific scout. While some aspects of the disclosure relate to using a team-specific scout to generate incident-classification predictions, other aspects relate to creating a team-specific scout. For example, teams may be provided with an easy-to-use framework for creating a team-specific scout to generate incident-classification predictions for that team. The easy-to-use framework may, in some cases, be designed so that teams without prior machine learning knowledge or expertise may nonetheless be able to create and train a team-specific scout. In an example, the framework is easy for teams to use because it prompts teams to provide certain information necessary to create and train a team-specific scout.

Method 700 for creating a team-specific scout begins at operation 701, where the scout framework receives component naming specifications. As discussed above, component naming specifications may be used to help the team-specific scout identify cloud components relevant to an incident. These component naming specifications may be written in the form of regular expressions or any other form which would allow the team-specific scout to identify, from an incident description, cloud components relevant to an incident.

Method 700 proceeds to operation 702 where the scout framework receives component topology and dependency. Like component naming specifications, component topology and dependency may be useful to a team-specific scout in identifying cloud components relevant to an incident. For example, an incident description may contain information about a component functioning differently than expected. However, a component may be malfunctioning because it is dependent on a different cloud component that is not referenced in the incident description. Thus, in some instances, a team-specific scout may use component topology and dependency to identify a cloud component relevant to an incident, even if the cloud component is not referenced in the incident description.

Method 700 proceeds to operation 703 where the scout framework receives the location of monitoring data. The location of monitoring data may specify, for the monitoring data collected and used by the team, where the monitoring data is stored within the monitoring module. This information will allow the team-specific scout to access the data when it determines that the monitoring data is relevant to an incident.

Method 700 proceeds to operation 704, where the scout framework receives component associations of monitoring data. In an example, component associations include information specifying to which cloud component a given set of monitoring data refers. A team-specific scout may use component associations to identify monitoring data relevant to an incident based on identifying a cloud component relevant to an incident.

Next, method 700 proceeds to operation 705 where the scout framework receives a data type annotation. When a team provides information about the monitoring data the team normally collects, the team can additionally provide annotations that the team-specific scout can use to process the monitoring data. One example annotation is a data type annotation, which may specify that the monitoring data is either time series data or event data. In examples, the team-specific scout will use the data type annotation to determine what type of processing of the monitoring data is necessary before sending the monitoring data to a machine learning model.

Method 700 proceeds to operation 706, where the scout framework receives a data class annotation. Similar to the data type annotation, a data class annotation may be used by the team-specific scout when processing monitoring data. In an example, the data class annotation can be used to combine different monitoring data. For example, if monitoring data were collected from two different CPUs, one of which had 16 cores and the other 32 cores, the two CPUs may have feature sets with different dimensions. Many machine learning models may not be able to evaluate monitoring data having different feature set dimensions. Class annotations indicate which monitoring data can be combined, so that the data can be combined into a fixed-length feature set prior to evaluation by a machine learning model.

Method 700 proceeds to operation 707, where a team-specific scout is trained based on the information received by the scout framework. In an example, training a team-specific scout includes accessing historical records of incidents and monitoring data to train a team-specific scout to generate accurate incident-classification predictions. One example training method is Random Forest supervised learning, discussed above. In Random Forest supervised learning, a team-specific scout may learn relationships between incidents, monitoring data, and a team's capability to address or resolve incidents. For example, a Random Forest may learn rule-based decision trees based on prior incidents.

At operation 708, the team-specific scout is stored in the scout module. Once stored, the scout module may be sent incident descriptions and may assist in generating incident-classification predictions, such as by the method of Figure 2. Optionally, at operation 709, a scout may be retrained, such as according to the training techniques disclosed above with respect to operation 707. A scout may be continually retrained as more incident and monitoring data becomes available. Alternatively, a scout may only be retrained in response to certain events, such as the team-specific scout generating insufficiently accurate incident-classification predictions. In some examples, a team-specific scout is able to automatically adapt to changes in the available monitoring data so teams do not have to design a new team-specific scout each time monitoring data changes. Additionally, CPD+ machine learning models may be able to classify new incidents even if an RF model has low accuracy in such cases. In examples, the machine learning models re-adapt by retraining the RF and bag of words model based on new incidents properly classified by the CPD+ model. To implement this retraining technique, incident history may continuously stored and reused for purposes of training.

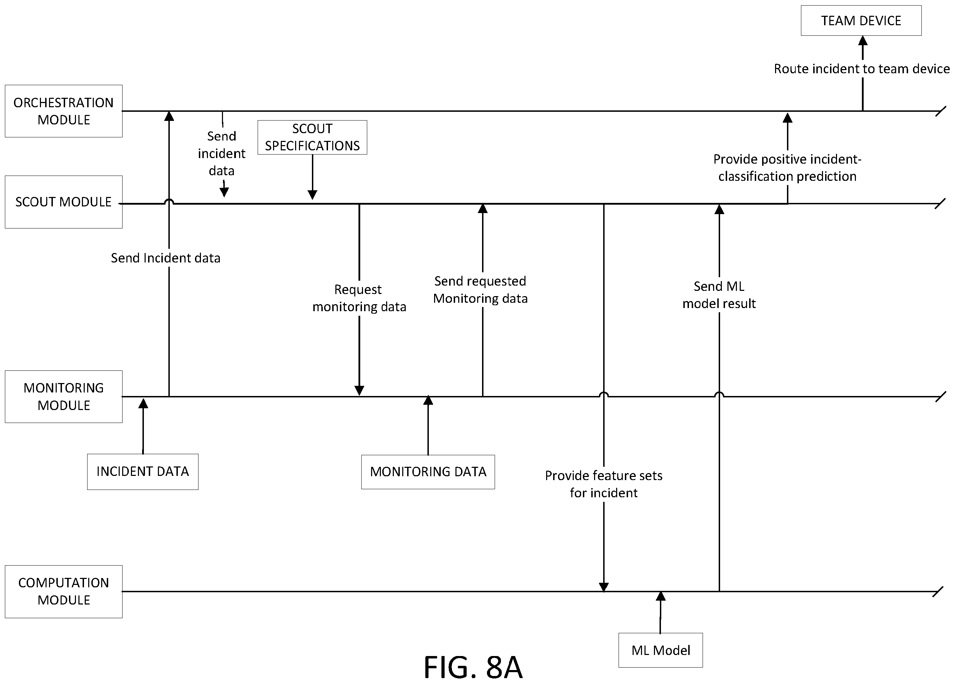

Figure 8A illustrates an example flow diagram of interactions between incident-routing components, such as those provided in Figures 1A and 1B. The flow begins at 801, when a monitoring module (e.g., monitoring module 115) detects an incident and generates an incident description containing incident data. In this example, incident data may include any information describing or relating to a detected incident, such as observed behaviors or collected data resulting from the incident. In this example, the monitoring module is shown as detecting an incident and generating an incident description containing incident data, but, as discussed, it will be appreciated that an incident may also be detected by a cloud customer using a client device, such as client device 101, through which the customer may provide an incident description. The monitoring module provides the incident data to an orchestration module (e.g., orchestration module 114) for routing the incident to a team capable of resolving the incident. The flow continues when the monitoring module receives monitoring data (e.g., monitoring data 118) from a cloud component (e.g., cloud component 104). In this Figure 8A, the monitoring module is shown receiving monitoring data after detecting an incident. It will be appreciated, however, that the monitoring module may continuously receive monitoring data from cloud components, such as cloud component 104. Alternatively, the monitoring module may receive monitoring data only when the monitoring module has reason to collect monitoring data, which may occur at any time along the timeline depicted in Figure 8A.

Flow continues when the orchestration module provides an incident description containing incident data to a scout module (e.g., scout module 117). In an example, scout module 117 includes a team-specific scout, such as team-specific scout 119 in Figure 1B, which may have its own team-specific scout specifications, such as scout specifications 122 illustrated in Figure 1B and discussed in operation 203 of method 200. In an example, scout module also includes a scout master, such as scout master 125 in Figure 1B. Next, the scout module requests monitoring data from the monitoring module. The requested monitoring data may be based on scout specifications. For example, the requested monitoring data may be associated with a cloud component identified as being relevant to the incident described in incident description. In response to receiving a request for monitoring data, the monitoring module provides the requested monitoring data to the scout module. In examples, providing the monitoring data includes sending monitoring data to the scout module over a network. In other examples, providing the monitoring data includes giving the scout module access to stored monitoring data within the monitoring module. In some instances, the monitoring module processes the data according to instructions from the scout module prior to providing the requested monitoring data. For example, the monitoring module may create feature sets from the requested monitoring data. Alternatively, in another instance, the scout module processes the requested monitoring data according to scout specifications after monitoring data is provided by the monitoring module.

Flow continues when the scout module provides relevant monitoring data to a computation module (e.g., computation module 116). Optionally, the scout module may pre-process the monitoring data prior to providing it to the computation module. For example, pre-processing may proceed as described in example Figure 3, where feature sets are generated from the identified monitoring data. As discussed above, the computation module may utilize more than one machine learning technique to evaluate the provided monitoring data. In one example, the computation module evaluates the provided monitoring data using a Random Forest machine learning model. In another example, the computation module evaluates the provided monitoring data using a modified Change Point Detection machine learning model. In aspects, the scout module or the computation module decides a single machine learning model to evaluate the provided monitoring data. In other examples, multiple models evaluate the provided monitoring data. In either example, the machine learning model operating within the computation module evaluates the provided monitoring data based at least in part on historical data related to prior incidents and prior monitoring data. In this way, the computation module provides a result to the scout module. In some examples, the result provided to the scout module is an incident classification-prediction. In other examples, though, the result may not directly contain an incident-classification prediction and may only contain data related to the machine learning model's evaluation of the provided monitoring data. In such an example, the scout module may be equipped to parse this result data in order to generate an incident-classification prediction.

Flow continues when the scout module provides an incident-classification prediction to the orchestration module. In this example Figure 8A, the incident-classification prediction comprises a positive prediction indicating that a team is likely to be responsible for resolving an incident. As discussed, the scout module may receive this incident-classification prediction as a direct output of a machine learning model within the computation module. Or, alternatively, the scout module may generate the incident-classification prediction based on the result provided by the machine learning model of the computation module. As previously described, the incident-classification prediction may be a "yes" or "no," where "yes" indicates that the team-specific scout believes the team with which it is associated can address the incident and a "no" indicates that the team-specific scout does not believe the team with which it is associated can address the incident. Or, in other examples, the prediction may not be a yes or no answer. In some examples, a negative incident-classification prediction may contain information that may help determine which team it believes can address the incident.

In any of these examples, the prediction may also include a confidence rating. In examples, a confidence rating reflects the strength of the incident-classification prediction. That is, the confidence rating may correspond to the likelihood that a team-specific scout's incident-classification prediction will be accurate. A confidence rating can be based on the quality of the monitoring data accessed and used as input for the machine learning model. For example, if the monitoring data is noisy or if different sets of monitoring data provide contradicting evidence regarding a cause of an incident, a team-specific scout may provide an incident-classification prediction with a lower confidence rating. In any of these examples, the incident-classification prediction may additionally or alternatively include a prediction about the prioritization of the incident. For example, the prediction may contain an indication that a certain incident should be treated with a higher level of priority than another incident. An example prioritization prediction may be based on the team-specific scout determining, based on an incident description, that the incident is likely to more significantly impact customers' cloud experience as compared to other incidents whose effects are less noticeable to customers.

Flow continues when the orchestration module routes the incident. In an example, the orchestration module receives an incident-classification prediction indicating that a team is likely to be able to resolve an incident quickly and efficiently (i.e., a positive incident-classification prediction). Based on this positive prediction, the orchestration module may route the incident to that team. Routing an incident to a team may include, for example, sending information about the incident to one or more devices associated with that team. For example the orchestration module may have access to a database storing information about device ownership among teams. The orchestration module may use this data to identify computing devices with which team members are associated (e.g., as owner of the device) and may automatically send, over a network, information about the incident to those computing devices. Alternatively, the orchestration module may access a database storing contact information (e.g., an email address) for members of teams and may send information about an incident using the stored contact information.

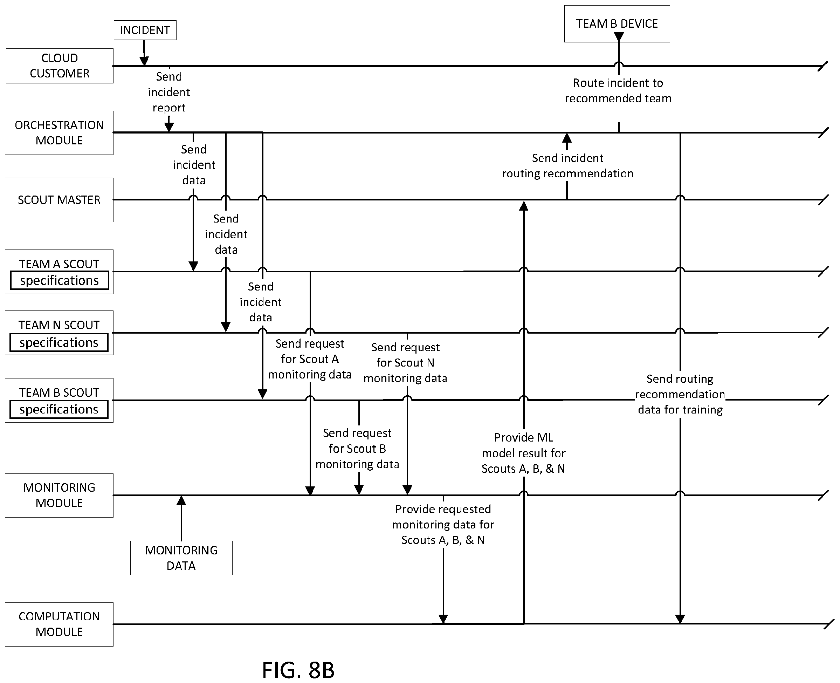

Figure 8B illustrates an example flow diagram of interactions between incident-routing components. The flow begins when a cloud customer experiences or observes an incident within the cloud environment. When the cloud customer detects an incident, cloud customer may use a client device (e.g., client device 101) to generate an incident report. A cloud customer may generate an incident report by, for example, submitting a support ticket describing a perceived problem with the cloud provider's cloud services. The incident report contains incident data relating to the incident experienced or observed by the cloud customer. Once generated, the incident data contained in the incident report is provided to an orchestration module (e.g., orchestration module 114), which will be responsible for routing the incident. The orchestration module begins by providing incident data to a plurality of team-specific scouts (e.g., team-specific scouts 119-121). The incident data may include the information received from a client device in incident report. Additionally or alternatively, the orchestration module may receive incident report and parse the customer-generated information therein to generate an incident description containing incident data. The orchestration module provides incident data to the team-specific scouts. The team-specific scouts may use each of their respective scout specifications, such as scout specifications 122-124 illustrated in Figure 1B, to identify cloud components (e.g., cloud component 104-108) and monitoring data (e.g., monitoring data 118) relevant to the incident based on incident data. The team-specific scouts then identify this relevant monitoring data to a monitoring module (e.g., monitoring module 115), where the identified monitoring data is collected and stored. As discussed, the monitoring module may routinely and continuously collect monitoring data from a cloud component. Or, alternatively, the monitoring module may collect monitoring data only once relevant monitoring data has been identified by a team-specific scout. Once identified, though, the monitoring module may access the identified monitoring data and may, in some examples, process the monitoring data to generate feature sets, as described with respect to Figures 2 and 3.

Flow continues when the monitoring module provides relevant monitoring data to a computation module (e.g., computation module 116). Monitoring data may be processed to form feature sets or may comprise raw data depending on the requirements and preferences of the computation module. Within the computation module, one or more machine learning models may then evaluate the provided monitoring data. The computation module or team-specific scouts may identify a single machine leaning model most likely to generate an accurate incident-classification prediction. Deciding which machine learning model is most likely to generate an accurate incident-classification prediction may also entail utilizing a meta-learning model, as previously discussed.

Flow continues when the computation module provides a machine learning model result to the team-specific scout. In some examples, the machine learning model result is an incident classification-prediction. In other examples, the result does not directly contain an incident-classification prediction and only contains data related to the machine learning model's evaluation of the provided monitoring data. In such an example, the team-specific scout may be equipped to parse this result data in order to generate an incident-classification prediction.

Flow continues when each of the team-specific scouts provides an incident-classification prediction to a scout master (e.g., scout master 125). In response to receiving an incident report or incident description, the orchestration module provides incident description to multiple team-specific scouts, which each provide an incident-classification prediction to the scout master. The scout master receives one or more incident-classification predictions from one or more team-specific scouts. The scout master then determines, based on the incident-classification predictions, which team is most likely to be able to resolve an incident quickly and efficiently. In an example, this determination proceeds according to the method described with respect to Figure 2. Based on this analysis of the incident-classification predictions, the scout master makes a determination about which team is most likely to be able to resolve an incident quickly and efficiently. The scout master provides this determination in the form of an incident-routing recommendation to the orchestration module, which is capable of routing an incident based on the incident-routing recommendation.

Flow continues when the orchestration module receives the incident-routing recommendation from the scout master indicating that an incident should be routed to one of the teams associated with a team-specific scout. In response to receiving this indication, the orchestration module may route the incident to the recommended team. In this case, routing the incident comprises routing information related to the incident to a device associated with Team B. In other words, scout master indicated to the orchestration module that Team B is likely to be able to resolve the incident quickly and efficiently (i.e., is responsible for resolving the incident).

Optionally, after receiving an incident-routing recommendation and routing an incident to a recommended team, the orchestration module may also send data to the computation module, where the data may be used to continue to train and re-train machine learning models for various team-specific scouts. In certain cases, the team-specific scouts will continually re-train machine learning models, such as Random Forest supervised learning models, to continually adapt to constantly changing incidents. Machine learning models may use historical incident-routing decisions as a training set to continually inform future incident-classification predictions.

It will be appreciated that aspects of Figures 8A and 8B may be implemented in part or in combination. For example, Figure 8A is depicted with a monitoring module detecting an incident, whereas Figure 8B is depicted with the orchestration module receiving an incident report from a client device. It will be appreciated that these incident-detecting techniques are not mutually exclusive and may be utilized individually or in combination.

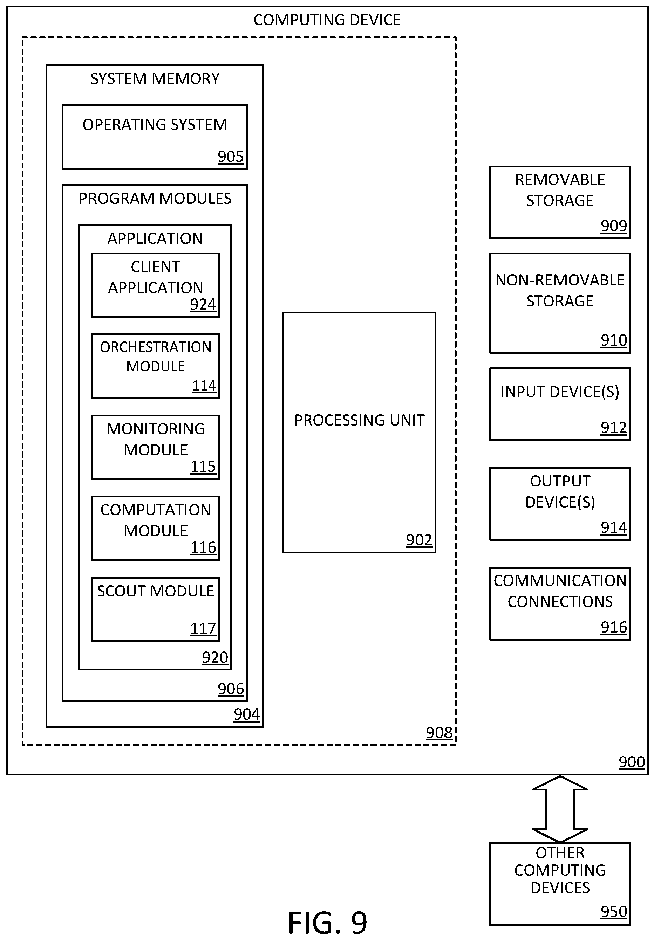

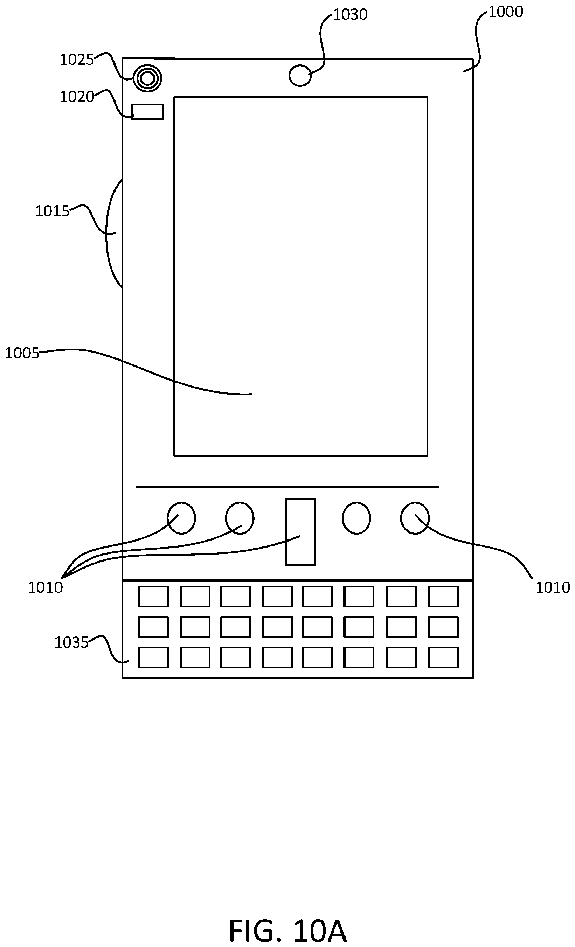

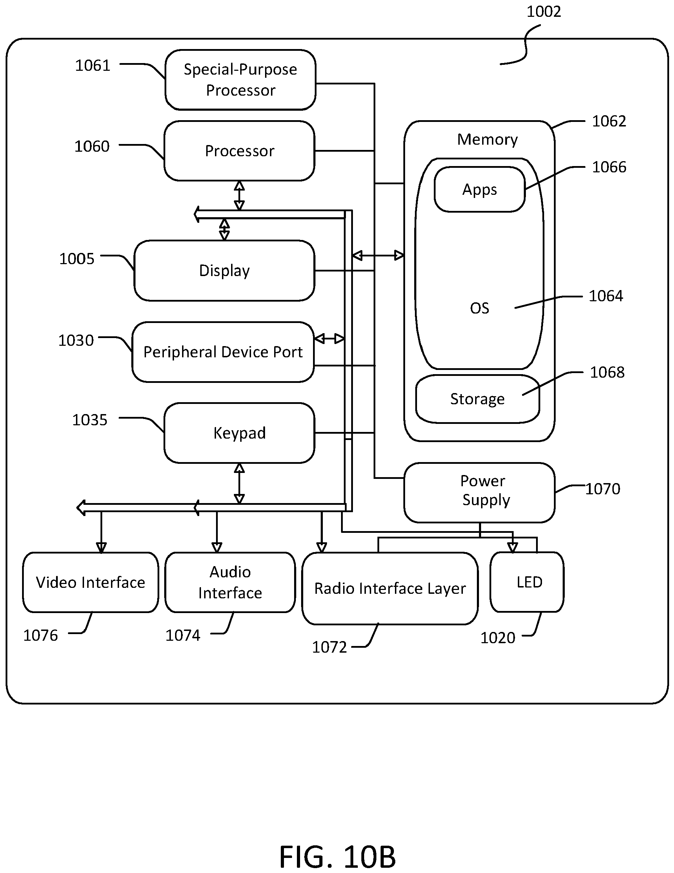

Figures 9, 10A, and 10B and the associated descriptions provide a discussion of a variety of operating environments in which aspects of the disclosure may be practiced. However, the devices and systems illustrated and discussed with respect to Figures 9, 10A, and 10B are for purposes of example and illustration and are not limiting of a vast number of computing device configurations that may be utilized for practicing aspects of the disclosure, described herein.

FIG. 9 is a block diagram illustrating physical components (e.g., hardware) of a computing device 900 with which aspects of the disclosure may be practiced. The computing device components described below may be suitable for the computing devices described above, including the computing devices 101, 109, and 110 in Figure 1. In a basic configuration, the computing device 900 may include at least one processing unit 902 and a system memory 904. Depending on the configuration and type of computing device, the system memory 904 may comprise, but is not limited to, volatile storage (e.g., random access memory), non-volatile storage (e.g., read-only memory), flash memory, or any combination of such memories.

The system memory 904 may include an operating system 905 and one or more program modules 906 suitable for running software application 920, such as one or more components supported by the systems described herein. As examples, system memory 904 may store client application 924, orchestration module 114, monitoring module 115, computation module 117, and scout module 117 individually or in combination. The operating system 905, for example, may be suitable for controlling the operation of the computing device 900.

Furthermore, embodiments of the disclosure may be practiced in conjunction with a graphics library, other operating systems, or any other application program and is not limited to any particular application or system. This basic configuration is illustrated in FIG. 9 by those components within a dashed line 908. The computing device 900 may have additional features or functionality. For example, the computing device 900 may also include additional data storage devices (removable and/or non-removable) such as, for example, magnetic disks, optical disks, or tape. Such additional storage is illustrated in FIG. 9 by a removable storage device 909 and a non-removable storage device 910.

As stated above, a number of program modules and data files may be stored in the system memory 904. While executing on the processing unit 902, the program modules 906 (e.g., application 920) may perform processes including, but not limited to, the aspects, as described herein. Other program modules that may be used in accordance with aspects of the present disclosure may include electronic mail and contacts applications, word processing applications, spreadsheet applications, database applications, slide presentation applications, drawing or computer-aided application programs, etc.

Furthermore, embodiments of the disclosure may be practiced in an electrical circuit comprising discrete electronic elements, packaged or integrated electronic chips containing logic gates, a circuit utilizing a microprocessor, or on a single chip containing electronic elements or microprocessors. For example, embodiments of the disclosure may be practiced via a system-on-a-chip (SOC) where each or many of the components illustrated in FIG. 9 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to the capability of client to switch protocols may be operated via application-specific logic integrated with other components of the computing device 900 on the single integrated circuit (chip). Embodiments of the disclosure may also be practiced using other technologies capable of performing logical operations such as, for example, AND, OR, and NOT, including but not limited to mechanical, optical, fluidic, and quantum technologies. In addition, embodiments of the disclosure may be practiced within a general purpose computer or in any other circuits or systems.

The computing device 900 may also have one or more input device(s) 912 such as a keyboard, a mouse, a pen, a sound or voice input device, a touch or swipe input device, etc. The output device(s) 914 such as a display, speakers, a printer, etc. may also be included. The aforementioned devices are examples and others may be used. The computing device 900 may include one or more communication connections 916 allowing communications with other computing devices 950. Examples of suitable communication connections 916 include, but are not limited to, radio frequency (RF) transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 904, the removable storage device 909, and the non-removable storage device 910 are all computer storage media examples (e.g., memory storage). Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 900. Any such computer storage media may be part of the computing device 900. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

FIGS. 10A and 10B illustrate a mobile computing device 1000, for example, a mobile telephone, a smart phone, wearable computer (such as a smart watch), a tablet computer, a laptop computer, and the like, with which embodiments of the disclosure may be practiced. In some aspects, the client may be a mobile computing device. With reference to FIG. 10A, one aspect of a mobile computing device 1000 for implementing the aspects is illustrated. In a basic configuration, the mobile computing device 1000 is a handheld computer having both input elements and output elements. The mobile computing device 1000 typically includes a display 1005 and one or more input buttons 1010 that allow the user to enter information into the mobile computing device 1000. The display 1005 of the mobile computing device 1000 may also function as an input device (e.g., a touch screen display).

If included, an optional side input element 1015 allows further user input. The side input element 1015 may be a rotary switch, a button, or any other type of manual input element. In alternative aspects, mobile computing device 1000 may incorporate more or less input elements. For example, the display 1005 may not be a touch screen in some embodiments.

In yet another alternative embodiment, the mobile computing device 1000 is a portable phone system, such as a cellular phone. The mobile computing device 1000 may also include an optional keypad 1035. Optional keypad 1035 may be a physical keypad or a "soft" keypad generated on the touch screen display.

In various embodiments, the output elements include the display 1005 for showing a graphical user interface (GUI), a visual indicator 1020 (e.g., a light emitting diode), and/or an audio transducer 1025 (e.g., a speaker). In some aspects, the mobile computing device 1000 incorporates a vibration transducer for providing the user with tactile feedback. In yet another aspect, the mobile computing device 1000 incorporates input and/or output ports, such as an audio input (e.g., a microphone jack), an audio output (e.g., a headphone jack), and a video output (e.g., a HDMI port) for sending signals to or receiving signals from an external device.

FIG. 10B is a block diagram illustrating the architecture of one aspect of a mobile computing device. That is, the mobile computing device 1000 can incorporate a system (e.g., an architecture) 1002 to implement some aspects. In one embodiment, the system 1002 is implemented as a "smart phone" capable of running one or more applications (e.g., browser, e-mail, calendaring, contact managers, messaging clients, games, and media clients/players). In some aspects, the system 1002 is integrated as a computing device, such as an integrated personal digital assistant (PDA) and wireless phone.

One or more application programs 1066 may be loaded into the memory 1062 and run on or in association with the operating system 1064. Examples of the application programs include phone dialer programs, e-mail programs, personal information management (PIM) programs, word processing programs, spreadsheet programs, Internet browser programs, messaging programs, and so forth. The system 1002 also includes a nonvolatile storage area 1068 within the memory 1062. The non-volatile storage area 1068 may be used to store persistent information that should not be lost if the system 1002 is powered down. The application programs 1066 may use and store information in the non-volatile storage area 1068, such as e-mail or other messages used by an e-mail application, and the like. A synchronization application (not shown) also resides on the system 1002 and is programmed to interact with a corresponding synchronization application resident on a host computer to keep the information stored in the non-volatile storage area 1068 synchronized with corresponding information stored at the host computer. As should be appreciated, other applications may be loaded into the memory 1062 and run on the mobile computing device 1000 described herein (e.g., search engine, extractor module, relevancy ranking module, answer scoring module, etc.).

The system 1002 has a power supply 1070, which may be implemented as one or more batteries. The power supply 1070 might further include an external power source, such as an AC adapter or a powered docking cradle that supplements or recharges the batteries.

The system 1002 may also include a radio interface layer 1072 that performs the function of transmitting and receiving radio frequency communications. The radio interface layer 1072 facilitates wireless connectivity between the system 1002 and the "outside world," via a communications carrier or service provider. Transmissions to and from the radio interface layer 1072 are conducted under control of the operating system 1064. In other words, communications received by the radio interface layer 1072 may be disseminated to the application programs 1066 via the operating system 1064, and vice versa.

The visual indicator 1020 may be used to provide visual notifications, and/or an audio interface 1074 may be used for producing audible notifications via the audio transducer 1025. In the illustrated embodiment, the visual indicator 1020 is a light emitting diode (LED) and the audio transducer 1025 is a speaker. These devices may be directly coupled to the power supply 1070 so that when activated, they remain on for a duration dictated by the notification mechanism even though the processor 1060 and other components might shut down for conserving battery power. The LED may be programmed to remain on indefinitely until the user takes action to indicate the powered-on status of the device. The audio interface 1074 is used to provide audible signals to and receive audible signals from the user. For example, in addition to being coupled to the audio transducer 1025, the audio interface 1074 may also be coupled to a microphone to receive audible input, such as to facilitate a telephone conversation. In accordance with embodiments of the present disclosure, the microphone may also serve as an audio sensor to facilitate control of notifications, as will be described below. The system 1002 may further include a video interface 676 that enables an operation of an on-board camera 1030 to record still images, video stream, and the like.

A mobile computing device 1000 implementing the system 1002 may have additional features or functionality. For example, the mobile computing device 1000 may also include additional data storage devices (removable and/or non-removable) such as, magnetic disks, optical disks, or tape. Such additional storage is illustrated in FIG. 10B by the non-volatile storage area 1068.

Data/information generated or captured by the mobile computing device 1000 and stored via the system 1002 may be stored locally on the mobile computing device 1000, as described above, or the data may be stored on any number of storage media that may be accessed by the device via the radio interface layer 1072 or via a wired connection between the mobile computing device 1000 and a separate computing device associated with the mobile computing device 1000, for example, a server computer in a distributed computing network, such as the Internet. As should be appreciated such data/information may be accessed via the mobile computing device 1000 via the radio interface layer 1072 or via a distributed computing network. Similarly, such data/information may be readily transferred between computing devices for storage and use according to well-known data/information transfer and storage means, including electronic mail and collaborative data/information sharing systems.

As will be understood from the foregoing disclosure, one aspect of the technology relates to a computer-implemented method for generating an incident-classification prediction in a cloud-computing system. The method comprises: receiving, at a local scout component, an incident description related to an incident from a cloud-computing system, wherein the local scout component is associated with a user group, and wherein the local scout component includes scout specifications related to the user group; identifying, from the incident description, a cloud component relevant to the incident based on the scout specifications; identifying monitoring data associated with the cloud component; generating a feature set from the monitoring data; evaluating, using a machine learning model, the feature set to generate an incident-classification prediction, wherein the incident-classification prediction comprises a binary decision regarding whether the user group is responsible for the incident; and routing the incident to the user group when it is determined that the user group is responsible for the incident. In an example, the method further comprises providing an explanation as to why the user group is not responsible for the incident when it is determined that the user group is not responsible for the incident. In another example, identifying the monitoring data further comprises using the scout specifications to determine an association between the monitoring data and the cloud component. In a further example, identifying the monitoring data further comprises using the scout specifications to determine a location of the monitoring data. In yet another example, the machine learning model is one of a random forest model and a change-point-detection model. In a further still example, the change-point-detection model is utilized in combination with a random forest model configured to supplement the change-point-detection model. In an example, the machine learning model is selected by using a meta-model. In another example, the meta-model is trained to determine which machine-learning model is likely to be generate an accurate incident-classification prediction. In a further example, the method further comprises using an RF-based bag of words model to create a training set for the meta-model. In yet another example, the method further comprises providing data relating to the incident-classification prediction to the machine learning model for training the machine learning model. In a further still example, the incident description related to the incident is received from a customer of the cloud computing system.

In another aspect, the technology relates to a method for automated routing of incidents associated with a cloud-based system to a user group responsible for resolving the incident. The method comprises: receiving an incident description at a first local scout component associated with a first user group, wherein the first local scout component comprises first scout specifications related to the first user group; receiving the incident description at a second local scout component associated with a second user group, wherein the second local scout component comprises second scout specifications related to the second user group; generating, using a machine learning model, a first incident-classification prediction for the first scout based on the incident description and the first scout specifications, wherein the incident-classification prediction comprises a first relatedness prediction that indicates whether the first user group is responsible for the incident and a first confidence value when the first relatedness prediction is positive; generating, using the machine learning model, a second incident-classification prediction for the second scout based on the incident description and the second scout specifications, wherein the second incident-classification prediction comprises a second relatedness prediction that indicates whether the second user group is responsible for the incident and a second confidence value when the second relatedness prediction is positive; and in response to determining that each of the first incident-classification prediction and the second incident-classification prediction are positive: comparing the first confidence value of the first incident-classification prediction to the second confidence value of the second incident-classification prediction; and in response to determining that the first confidence value is greater than the second confidence value, routing the incident to the first user group. In an example, the first local scout component and the second local scout component receive the incident description at approximately the same time and generate the first incident-classification prediction and the second incident-classification prediction concurrently. In another example, routing the incident to the first user group comprises sending the incident description to a device associated with the first user group. In a further example, the first set of scout specifications comprises component-naming specifications and monitoring data annotations. In yet another example, the method further comprises, in response to determining that the first incident-classification prediction is positive and the second incident-classification prediction is negative, routing the incident to the first user group and not routing the incident to the second user group. In a further still example, the method further comprises: requesting, by the first scout, monitoring data relating to the incident; and using the requested monitoring data in conjunction with the incident description and the first scout specifications to generate the first incident-classification prediction.

In a further aspect, the technology relates to system comprising at least one processor; and memory storing instructions that, when executed by the at least one processor, cause the system to perform a set of operations. The set of operations comprises: receiving, at a plurality of team-specific scout components, an incident description related to an incident from a cloud-computing system; identifying, at each of the plurality of team-specific scout components, a cloud component relevant to the incident based on the incident description; collecting, for each of the plurality of team-specific scout components, monitoring data relevant to the incident based on specifications specific to each of the plurality of team-specific scout components; generating an incident-routing prediction, using a machine learning model, for each of the plurality of team-specific scout components, wherein the machine learning model has been trained based on historical data relating to prior incident-routing recommendations and the incident-routing prediction for each of the plurality of team-specific scout components is based on the monitoring data and the historical data; generating an incident-routing recommendation that identifies a team that is associated with one of the plurality of team specific scouts, wherein the incident-routing recommendation is based on a comparison of the incident-routing predictions for each of the plurality of team-specific scout components; and routing the incident to the team identified in the incident routing recommendation. In an example, the set of operations further comprises providing the incident routing recommendation to the machine learning model. In another example, the incident description comprises a natural language description of the incident in the cloud-computing system.

Aspects of the present disclosure, for example, are described above with reference to block diagrams and/or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects that do not depart from the broader scope of the claimed disclosure.

## Claims

1. A computer-implemented method for generating an incident-classification prediction in a cloud-computing system, the method comprising:
receiving (201), at a local scout component (119), an incident description related to an incident from a cloud-computing system, wherein the local scout component is associated with a user group, and wherein the local scout component includes scout specifications (122) related to the user group (111);
identifying (203), from the incident description, a cloud component (104A) relevant to the incident based on the scout specifications;
identifying (204) monitoring data (118) associated with the cloud component;
generating (205) a feature set from the monitoring data;
evaluating, using a machine learning model, wherein the machine learning model has been trained based on historical data relating to prior incident-routing recommendations, the feature set to generate an incident-classification prediction, wherein the incident-classification prediction comprises a binary decision regarding whether the user group is responsible for the incident; and
routing the incident to the user group when it is determined that the user group is responsible for the incident.

2. The method of claim 1, further comprising providing an explanation as to why the user group is not responsible for the incident when it is determined that the user group (111, 112) is not responsible for the incident.

3. The method of claim 1, wherein identifying (204) the monitoring data (118) further comprises using the scout specifications to determine an association between the monitoring data and the cloud component (104A).

4. The method of claim 3, wherein identifying (204) the monitoring data (118) further comprises using the scout specifications to determine a location of the monitoring data.

5. The method of claim 1, wherein the method is further for automated routing of incidents associated with the cloud-based system to the user group responsible for resolving the incident, the method comprising:
receiving (201) the incident description at a second local scout component (120) associated with a second user group (112), wherein the second local scout component (120) comprises second scout specifications (123) related to the second user group;
wherein the incident-classification prediction comprises the binary decision as a first relatedness prediction that indicates whether the user group is responsible for the incident and a first confidence value when the first relatedness prediction is positive;
generating, using the machine learning model, a second incident-classification prediction for the second scout based on the incident description and the second scout specifications, wherein the second incident-classification prediction comprises a second relatedness prediction that indicates whether the second user group is responsible for the incident and a second confidence value when the second relatedness prediction is positive; and
in response to determining (604) that each of the incident-classification prediction and the second incident-classification prediction are positive:
comparing (606) the first confidence value of the incident-classification prediction to the second confidence value of the second incident-classification prediction; and
in response to determining that the first confidence value is greater than the second confidence value, routing the incident to the user group.

6. The method of claim 5, wherein the local scout component (119) and the second local scout component (120) receive the incident description at approximately the same time and generate the incident-classification prediction and the second incident-classification prediction concurrently.

7. The method of claim 5, wherein routing the incident to the user group comprises sending the incident description to a device (109) associated with the user group (111).

8. The method of claim 5, wherein the machine learning model is a change-point-detection model and is utilized in combination with a random forest model configured to supplement the change-point-detection model.

9. The method of claim 1, further comprising providing data relating to the incident-classification prediction to the machine learning model for training the machine learning model.

10. The method of claim 1, wherein the machine learning model is one of a random forest model or a change-point-detection model.

11. The method of claim 5, wherein the set of scout specifications comprises component-naming specifications and monitoring data annotations.

12. The method of claim 5, further comprising:
in response to determining that the incident-classification prediction is positive and the second incident-classification prediction is negative, routing the incident to the user group and not routing the incident to the second user group.

13. A system comprising:
at least one processor; and
memory storing instructions that, when executed by the at least one processor, cause the system to perform a set of operations, the set of operations comprising:
receiving, at a plurality of group-specific scout components (119, 120, 132), an incident description related to an incident from a cloud-computing system;
identifying, at each of the plurality of group-specific scout components, a cloud component (104A-108A, 104B-108B) relevant to the incident based on the incident description;
collecting, for each of the plurality of group-specific scout components, monitoring data (118) relevant to the incident based on specifications specific to each of the plurality of group-specific scout components;
generating an incident-routing prediction, using a machine learning model, for each of the plurality of group-specific scout components, wherein the machine learning model has been trained based on historical data relating to prior incident-routing recommendations and the incident-routing prediction for each of the plurality of group-specific scout components is based on the monitoring data and the historical data;
generating an incident-routing recommendation that identifies a group that is associated with one of the plurality of group specific scouts, wherein the incident-routing recommendation is based on a comparison of the incident-routing predictions for each of the plurality of group-specific scout components; and
routing the incident to the group identified in the incident routing recommendation.

14. The system of claim 13, wherein the set of operations further comprises providing the incident-routing recommendation to the machine learning model.

15. The system of claim 13, wherein the machine learning model is selected by using a meta-model trained to determine which machine learning model is likely to generate an accurate incident-classification prediction.

## Patentansprüche

1. Computerimplementiertes Verfahren zum Erzeugen einer Ereignisklassifizierungsvorhersage in einem Cloud-Computing-System, wobei das Verfahren umfasst:
Empfangen (201) einer Ereignisbeschreibung, die sich auf ein Ereignis bezieht, an einer lokalen Scout-Komponente (119) von einem Cloud-Computing-System, wobei die lokale Scout-Komponente einer Benutzergruppe zugeordnet ist, und wobei die lokale Scout-Komponente Scout-Spezifikationen (122) beinhaltet, die sich auf die Benutzergruppe (111) beziehen;
Erkennen (203), anhand der Ereignisbeschreibung auf Basis der Scout-Spezifikationen, einer für das Ereignis relevanten Cloud-Komponente (104A);
Erkennen (204) von Überwachungsdaten (118), die der Cloud-Komponente zugeordnet sind;
Erzeugen (205) eines Merkmalssatzes anhand der Überwachungsdaten;
Auswerten des Merkmalssatzes unter Verwendung eines maschinellen Lernmodells, wobei das maschinelle Lernmodell auf der Basis von historischen Daten, die sich auf frühere Ereignisrouting-Empfehlungen beziehen, trainiert wurde, um eine Ereignisklassifizierungsvorhersage zu erzeugen, wobei die Ereignisklassifizierungsvorhersage eine binäre Entscheidung darüber umfasst, ob die Benutzergruppe für das Ereignis verantwortlich ist; und
Routing des Ereignisses an die Benutzergruppe, wenn bestimmt wird, dass die Benutzergruppe für das Ereignis verantwortlich ist.

2. Verfahren nach Anspruch 1, weiter umfassend das Bereitstellen einer Erklärung, warum die Benutzergruppe nicht für das Ereignis verantwortlich ist, wenn bestimmt wird, dass die Benutzergruppe (111, 112) nicht für das Ereignis verantwortlich ist.

3. Verfahren nach Anspruch 1, wobei das Erkennen (204) der Überwachungsdaten (118) weiter das Verwenden der Scout-Spezifikationen umfasst, um eine Zuordnung zwischen den Überwachungsdaten und der Cloud-Komponente (104A) zu bestimmen.

4. Verfahren nach Anspruch 3, wobei das Erkennen (204) der Überwachungsdaten (118) weiter das Verwenden der Scout-Spezifikationen umfasst, um einen Ort der Überwachungsdaten zu bestimmen.

5. Verfahren nach Anspruch 1, wobei das Verfahren weiter zum automatischen Routing von Vorfällen, die dem Cloud-basierten System zugeordnet sind, an die Benutzergruppe dient, die für die Lösung des Vorfalls verantwortlich ist, wobei das Verfahren umfasst:
Empfangen (201) der Ereignisbeschreibung an einer zweiten lokalen Scout-Komponente (120), die einer zweiten Benutzergruppe (112) zugeordnet ist, wobei die zweite lokale Scout-Komponente (120) zweite Scout-Spezifikationen (123) umfasst, die sich auf die zweite Benutzergruppe beziehen;
wobei die Ereignisklassifizierungsvorhersage die binäre Entscheidung als eine erste Beziehungsvorhersage, die angibt, ob die Benutzergruppe für das Ereignis verantwortlich ist, und einen ersten Konfidenzwert umfasst, wenn die erste Beziehungsvorhersage positiv ist;
Erzeugen, unter Verwendung des maschinellen Lernmodells, einer zweiten Ereignisklassifizierungsvorhersage für den zweiten Scout auf Basis der Ereignisbeschreibung und der zweiten Scout-Spezifikationen, wobei die zweite Ereignisklassifizierungsvorhersage eine zweite Beziehungsvorhersage, die angibt, ob die zweite Benutzergruppe für das Ereignis verantwortlich ist, und einen zweiten Konfidenzwert umfasst, wenn die zweite Beziehungsvorhersage positiv ist; und
als Reaktion auf das Bestimmen (604), dass sowohl die Ereignisklassifizierungsvorhersage als auch die zweite Ereignisklassifizierungsvorhersage positiv sind:
Vergleichen (606) des ersten Konfidenzwertes der Ereignisklassifizierungsvorhersage mit dem zweiten Konfidenzwert der zweiten Ereignisklassifizierungsvorhersage; und
als Reaktion auf das Bestimmen, dass der erste Konfidenzwert größer ist als der zweite Konfidenzwert, Routing des Ereignisses an die Benutzergruppe.

6. Verfahren nach Anspruch 5, wobei die lokale Scout-Komponente (119) und die zweite lokale Scout-Komponente (120) die Ereignisbeschreibung zu ungefähr der gleichen Zeit empfangen und die Ereignisklassifizierungsvorhersage und die zweite Ereignisklassifizierungsvorhersage gleichzeitig erzeugen.

7. Verfahren nach Anspruch 5, wobei das Routing des Ereignisses an die Benutzergruppe das Senden der Ereignisbeschreibung an eine der Benutzergruppe (111) zugeordnete Vorrichtung (109) umfasst.

8. Verfahren nach Anspruch 5, wobei das maschinelle Lernmodell ein Change-Point-Detection-Modell ist und in Kombination mit einem Random-Forest-Modell genutzt wird, das so konfiguriert ist, dass es das Change-Point-Detection-Modell ergänzt.

9. Verfahren nach Anspruch 1, weiter umfassend das Bereitstellen von Daten, die sich auf die Ereignisklassifizierungsvorhersage beziehen, für das maschinelle Lernmodell zum Trainieren des maschinellen Lernmodells.

10. Verfahren nach Anspruch 1, wobei das maschinelle Lernmodell eines von einem Random-Forest-Modell oder einem Change-Point-Detection-Modell ist.

11. Verfahren nach Anspruch 5, wobei der Satz von Scout-Spezifikationen Komponentenbenennungsspezifikationen und Überwachungsdatenanmerkungen umfasst.

12. Verfahren nach Anspruch 5, weiter umfassend:
als Reaktion auf das Bestimmen, dass die Ereignisklassifizierungsvorhersage positiv ist und die zweite Ereignisklassifizierungsvorhersage negativ ist, Routing des Ereignisses an die Benutzergruppe und nicht Routing des Ereignisses an die zweite Benutzergruppe.

13. System, umfassend:
mindestens einen Prozessor; und
Speicher, der Anweisungen speichert, die, wenn sie von dem mindestens einen Prozessor ausgeführt werden, das System dazu bringen, einen Satz von Operationen durchzuführen, wobei der Satz von Operationen umfasst:
Empfangen, an einer Vielzahl von gruppenspezifischen Scout-Komponenten (119, 120, 132) von einem Cloud-Computing-System, einer Ereignisbeschreibung, die sich auf ein Ereignis bezieht;
Erkennen, an jeder der Vielzahl von gruppenspezifischen Scout-Komponenten, einer für das Ereignis relevanten Cloud-Komponente (104A-108A, 104B-108B) auf Basis der Ereignisbeschreibung;
Sammeln, für jede der Vielzahl von gruppenspezifischen Scout-Komponenten, von für das Ereignis relevanten Überwachungsdaten (118) auf Basis von Spezifikationen, die für jede der Vielzahl von gruppenspezifischen Scout-Komponenten spezifisch sind;
Erzeugen einer Ereignisrouting-Vorhersage unter Verwendung eines maschinellen Lernmodells für jede der Vielzahl von gruppenspezifischen Scout-Komponenten, wobei das maschinelle Lernmodell auf Basis von historischen Daten, die sich auf frühere Ereignisrouting-Empfehlungen beziehen, trainiert wurde und die Ereignisrouting-Vorhersage für jede der Vielzahl von gruppenspezifischen Scout-Komponenten auf den Überwachungsdaten und den historischen Daten basiert;
Erzeugen einer Ereignisrouting-Empfehlung, die eine Gruppe erkannt, die mit einem der Vielzahl von gruppenspezifischen Scouts zugeordnet ist, wobei die Ereignisrouting-Empfehlung auf einem Vergleich der Ereignisrouting-Vorhersagen für jede der Vielzahl von gruppenspezifischen Scout-Komponenten basiert; und
Routing des Ereignisses an die in der Ereignisrouting-Empfehlung erkannte Gruppe.

14. System nach Anspruch 13, wobei der Satz von Operationen weiter das Bereitstellen der Ereignisrouting-Empfehlung für das maschinelle Lernmodell umfasst.

15. System nach Anspruch 13, wobei das maschinelle Lernmodell unter Verwendung eines Metamodells ausgewählt wird, das trainiert wurde, um zu bestimmen, welches maschinelle Lernmodell wahrscheinlich eine genaue Ereignisklassifizierungsvorhersage erzeugen wird.

## Revendications

1. Procédé mis en oeuvre par ordinateur pour générer une prédiction de classification d'incident dans un système informatique cloud, le procédé comprenant les étapes consistant à :
recevoir (201), au niveau d'un composant de repérage local (119), une description d'incident liée à un incident à partir d'un système informatique cloud, dans lequel le composant de repérage local est associé à un groupe d'utilisateurs, et dans lequel le composant de repérage local inclut des spécifications de repérage (122) liées au groupe d'utilisateurs (111) ;
identifier (203), à partir de la description d'incident, un composant cloud (104A) pertinent pour l'incident sur la base des spécifications de repérage ;
identifier (204) des données de surveillance (118) associées au composant cloud ;
générer (205) un ensemble de caractéristiques à partir des données de surveillance ;
évaluer, à l'aide d'un modèle d'apprentissage automatique, le modèle d'apprentissage automatique ayant été entraîné sur la base de données historiques relatives à des recommandations de routage d'incident antérieures, la fonctionnalité définie pour générer une prédiction de classification d'incident, dans lequel la prédiction de classification d'incident comprend une décision binaire concernant si le groupe d'utilisateurs est responsable ou non de l'incident ; et
router l'incident vers le groupe d'utilisateurs lorsqu'il est déterminé que le groupe d'utilisateurs est responsable de l'incident.

2. Procédé selon la revendication 1, comprenant en outre la fourniture d'une explication quant à la raison pour laquelle le groupe d'utilisateurs n'est pas responsable de l'incident lorsqu'il est déterminé que le groupe d'utilisateurs (111, 112) n'est pas responsable de l'incident.

3. Procédé selon la revendication 1, dans lequel l'identification (204) des données de surveillance (118) comprend en outre l'utilisation des spécifications de repérage pour déterminer une association entre les données de surveillance et le composant cloud (104A).

4. Procédé selon la revendication 3, dans lequel l'identification (204) des données de surveillance (118) comprend en outre l'utilisation des spécifications de repérage pour déterminer un emplacement des données de surveillance.

5. Procédé selon la revendication 1, dans lequel le procédé est en outre destiné à un routage automatisé des incidents associés au système basé sur le cloud vers le groupe d'utilisateurs responsable pour résolution de l'incident, le procédé comprenant les étapes consistant à :
recevoir (201) la description d'incident au niveau d'un second composant de repérage local (120) associé à un second groupe d'utilisateurs (112), dans lequel le second composant de repérage local (120) comprend des secondes spécifications de repérage (123) associées au second groupe d'utilisateurs ;
dans lequel la prédiction de classification d'incident comprend la décision binaire en tant que première prédiction de relation qui indique si le groupe d'utilisateurs est responsable de l'incident et une première valeur de confiance lorsque la première prédiction de relation est positive ;
générer, à l'aide du modèle d'apprentissage automatique, une seconde prédiction de classification d'incident pour le second repérage sur la base de la description d'incident et des secondes spécifications de repérage, dans lequel la seconde prédiction de classification d'incident comprend une seconde prédiction de relation qui indique si le second groupe d'utilisateurs est responsable pour l'incident et une seconde valeur de confiance lorsque la seconde prédiction de relation est positive ; et
en réponse à la détermination (604) selon laquelle chacune de la prédiction de classification d'incident et de la seconde prédiction de classification d'incident est positive :
comparer (606) la première valeur de confiance de la prédiction de classification d'incident à la seconde valeur de confiance de la seconde prédiction de classification d'incident ; et
en réponse à la détermination que la première valeur de confiance est supérieure à la seconde valeur de confiance, router l'incident vers le groupe d'utilisateurs.

6. Procédé selon la revendication 5, dans lequel le composant de repérage local (119) et le second composant de repérage local (120) reçoivent la description d'incident approximativement au même moment et génèrent simultanément la prédiction de classification d'incident et la seconde prédiction de classification d'incident.

7. Procédé selon la revendication 5, dans lequel le routage de l'incident vers le groupe d'utilisateurs comprend l'envoi de la description d'incident à un dispositif (109) associé au groupe d'utilisateurs (111).

8. Procédé selon la revendication 5, dans lequel le modèle d'apprentissage automatique est un modèle de détection de point de changement et est utilisé en combinaison avec un modèle de forêt aléatoire configuré pour compléter le modèle de détection de point de changement.

9. Procédé selon la revendication 1, comprenant en outre une fourniture de données relatives à la prédiction de classification d'incident au modèle d'apprentissage automatique pour entraîner le modèle d'apprentissage automatique.

10. Procédé selon la revendication 1, dans lequel le modèle d'apprentissage automatique est un modèle de forêt aléatoire ou un modèle de détection de point de changement.

11. Procédé selon la revendication 5, dans lequel l'ensemble de spécifications de repérage comprend des spécifications de dénomination de composant et des annotations de données de surveillance.

12. Procédé selon la revendication 5, comprenant en outre l'étape consistant à :
en réponse à la détermination que la prédiction de classification d'incident est positive et que la seconde prédiction de classification d'incident est négative, router l'incident vers le groupe d'utilisateurs et ne pas router l'incident vers le second groupe d'utilisateurs.

13. Système, comprenant :
au moins un processeur ; et
une mémoire stockant des instructions qui, lorsqu'elles sont exécutées par le au moins un processeur, amènent le système à effectuer un ensemble d'opérations, l'ensemble d'opérations comprenant les étapes consistant à :
recevoir, au niveau d'une pluralité de composants de repérage spécifiques à un groupe (119, 120, 132), une description d'incident liée à un incident à partir d'un système informatique cloud ;
identifier, au niveau de chacun de la pluralité de composants de repérage spécifiques à un groupe, un composant cloud (104A-108A, 104B-108B) pertinent pour l'incident sur la base de la description d'incident ;
collecter, pour chacun de la pluralité de composants de repérage spécifiques à un groupe, des données de surveillance (118) pertinentes pour l'incident sur la base de spécifications spécifiques à chacun de la pluralité de composants de repérage spécifiques à un groupe ;
générer une prédiction de routage d'incident, à l'aide d'un modèle d'apprentissage automatique, pour chacun de la pluralité de composants de repérage spécifiques à un groupe, dans lequel le modèle d'apprentissage automatique a été entraîné sur la base de données historiques relatives à des recommandations de routage d'incident antérieures, et la prédiction de routage d'incident pour chacun de la pluralité de composants de repérage spécifiques à un groupe est basée sur les données de surveillance et les données historiques ;
générer une recommandation de routage d'incident qui identifie un groupe qui est associé à l'un de la pluralité de repérages spécifiques à un groupe, dans lequel la recommandation de routage d'incident est basée sur une comparaison des prédictions de routage d'incident pour chacun de la pluralité de composants de repérages spécifiques à un groupe ; et
router l'incident vers le groupe identifié dans la recommandation de routage d'incident.

14. Système selon la revendication 13, dans lequel l'ensemble d'opérations comprend en outre la fourniture de la recommandation de routage d'incident au modèle d'apprentissage automatique.

15. Système selon la revendication 13, dans lequel le modèle d'apprentissage automatique est sélectionné en utilisant un méta-modèle formé pour déterminer quel modèle d'apprentissage automatique est susceptible de générer une prédiction de classification d'incident précise.
